# EUROPEAN PATENT APPLICATION

(11) **EP 4 819 526 A1**
(43) Date of publication of application: **07.10.2026**
(21) Application number: 24899733.0
(22) Date of filing: 29.11.2024
(51) Int. Cl.: H04L 5/00, H04W 72/0453, H04W 36/00

(54) **SECONDARY CARRIER CONFIGURATION METHOD, UNIT, SYSTEM, ELECTRONIC DEVICE, AND STORAGE MEDIUM**

(30) Priority: 08.12.2023 CN 202311682888
(71) Applicant: ZTE CORPORATION, Shenzhen, Guangdong 518057 (CN)
(72) Inventor: KE, Tingting, Shenzhen, Guangdong 518057 (CN); WEN, Shaochun, Shenzhen, Guangdong 518057 (CN)
(74) Representative: Canzler & Bergmeier Patentanwälte Partnerschaft mbB
(86) International application number: PCT/CN2024/135596
(87) International publication number: WO 2025/119093

(57) **Abstract**

The present disclosure provides a secondary carrier configuration method, a unit, a system, an electronic device, and a storage medium. The method is applicable to a primary distributed unit in a primary base station corresponding to a user equipment (UE), and comprises: on the basis of a secondary cell pre-establishment list information element in a UE context modification request, determining secondary carriers to be aggregated; on the basis of a carrier aggregation coordination relationship of secondary distributed units corresponding to the secondary carriers to be aggregated, sending a secondary carrier establishment request to the secondary distributed units, wherein the secondary carrier establishment request comprises a mobility restriction list information element in the UE context modification request; and determining a UE context modification response message on the basis of a secondary carrier establishment success response message corresponding to the secondary carrier establishment request, so that the secondary carriers to be aggregated are configured for the UE on the basis of the UE context modification response message. The method implements direct communication between the primary distributed unit and the secondary distributed units, achieves quick addition of cross-station secondary carriers to the UE, and significantly improves the data information transmission efficiency.

## Description

### CROSS-REFERENCE TO RELATED APPLICATIONS

The present disclosure claims the priority of Chinese patent application No. CN202311682888.7 titled "SECONDARY CARRIER CONFIGURATION METHOD, UNIT, SYSTEM, ELECTRONIC DEVICE, and STORAGE MEDIUM" filed with the CNIPA on December 8, 2023, the entire contents of which are incorporated herein by reference.

### TECHNICAL FIELD

Embodiments of the present disclosure relate to, but are not limited to, the technical field of communications, and in particular relate to a secondary carrier configuration method, unit and system, an electronic device, and a storage medium.

### BACKGROUND

A carrier refers to a frequency of electromagnetic waves used by a base station for information transmission. In the process of signal transmission, the signal is not directly transmitted, but is loaded onto a wave of a fixed frequency. This process is called loading, and the fixed frequency here is called a carrier frequency. In other words, if a lower signal frequency is modulated to a higher frequency, the higher frequency modulated from the lower frequency is called a carrier frequency, also known as a fundamental frequency.

Carrier aggregation (CA) is a technology that improves the data rate and capacity by combining multiple independent carrier channels to increase the bandwidth. Carrier aggregation includes three combination modes: intra-band contiguous, intra-band non-contiguous, and inter-band non-contiguous, with increasing implementation complexity. In the process of networking deployment by operators, due to different coverage capabilities of different frequency bands, some terminals are often simultaneously covered by carriers from different stations, which poses a need to add cross-site secondary carriers from the perspective of carrier aggregation.

### SUMMARY

The present disclosure provides a secondary carrier configuration method, unit and system, an electronic device, and a storage medium which can improve the configuration efficiency of cross-site secondary carriers.

In a first aspect, an embodiment of the present disclosure provides a secondary carrier configuration method applicable to a master distributed unit (DU) in a master base station corresponding to a user equipment (UE), wherein the method includes: determining a secondary carrier to be aggregated based on a secondary cell setup list information element in a UE context modification request; sending a secondary carrier setup request to the secondary distributed unit based on a carrier aggregation coordination relationship of a secondary distributed unit corresponding to the secondary carrier to be aggregated, wherein the secondary carrier setup request includes a mobility restriction list information element in the UE context modification request; and determining a UE context modification response message based on a secondary carrier setup success response message corresponding to the secondary carrier setup request, so that the secondary carrier to be aggregated is configured for the user equipment (UE) based on the UE context modification response message.

In a second aspect, an embodiment of the present disclosure further provides a secondary carrier configuration method applicable to a secondary distributed unit, wherein the method includes: receiving a secondary carrier setup request including a mobility restriction list information element and sent from a master distributed unit; generating a secondary carrier setup success response message based on the mobility restriction list information element in the secondary carrier setup request, and returning the secondary carrier setup success response message to the master distributed unit, so that the master distributed unit obtains a UE context modification response message based on the secondary carrier setup success response message, and configures a secondary carrier to be aggregated for a user equipment (UE) based on the UE context modification response message.

In a third aspect, an embodiment of the present disclosure further provides a secondary carrier configuration method applicable to a master centralized unit in a master base station corresponding to a user equipment (UE), wherein the method includes: sending a UE context modification request message to a master distributed unit in the master base station; wherein the UE context modification request message includes a secondary cell setup list information element and a mobility restriction list information element; and receiving a UE context modification response message returned from the master distributed unit, and configuring a secondary carrier to be aggregated for the user equipment (UE) based on the UE context modification response message; wherein the UE context modification response message is generated in the method described above.

In a fourth aspect, an embodiment of the present disclosure further provides a master distributed unit, including: a determining module configured to determine a secondary carrier to be aggregated based on a secondary cell setup list information element in a UE context modification request; a sending module configured to send a secondary carrier setup request to the secondary distributed unit based on a carrier aggregation coordination relationship of a secondary distributed unit corresponding to the secondary carrier to be aggregated, wherein the secondary carrier setup request includes a mobility restriction list information element in the UE context modification request; and a configuration module configured to determine a UE context modification response message based on a secondary carrier setup success response message corresponding to the secondary carrier setup request, so that the secondary carrier to be aggregated is configured for the user equipment (UE) based on the UE context modification response message.

In a fifth aspect, an embodiment of the present disclosure provides a secondary distributed unit, including: a receiving module configured to receive a secondary carrier setup request including a mobility restriction list information element and sent from a master distributed unit; and a response module configured to generate a secondary carrier setup success response message based on the mobility restriction list information element in the secondary carrier setup request, and return the secondary carrier setup success response message to the master distributed unit, so that the master distributed unit obtains a UE context modification response message based on the secondary carrier setup success response message, and the secondary carrier to be aggregated is configured for the user equipment (UE) based on the UE context modification response message.

In a sixth aspect, an embodiment of the present disclosure provides a master centralized unit, including: a sending module configured to send a UE context modification request message to a master distributed unit in the master base station; wherein the UE context modification request message includes a secondary cell setup list information element and a mobility restriction list information element; and a receiving module configured to receive a UE context modification response message returned from the master distributed unit, and configure a secondary carrier to be aggregated for the user equipment (UE) based on the UE context modification response message; wherein the UE context modification response message is generated by the method described above.

In a seventh aspect, an embodiment of the present disclosure provides a secondary carrier configuration system, including: the master distributed unit according to the fourth aspect, the secondary distributed unit according to the fifth aspect, and the master centralized unit according to the sixth aspect.

In an eighth aspect, an embodiment of the present disclosure provides an electronic device, including a memory and a processor; wherein the memory stores a computer program executable by the processor which, when executed by the processor, causes the secondary carrier configuration method according to any of the above aspects to be implemented.

In a ninth aspect, an embodiment of the present disclosure provides a computer-readable storage medium having a computer program stored thereon which, when executed by a processor, causes the secondary carrier configuration method according to any of the above aspects to be implemented.

### BRIEF DESCRIPTION OF DRAWINGS

In the drawings of the embodiments of the present disclosure:
FIG. 1 shows a flowchart of a secondary carrier configuration method applicable to a master distributed unit in a master base station corresponding to a user equipment (UE);
FIG. 2 shows a schematic flowchart of a secondary carrier configuration method applicable to a secondary distributed unit;
FIG. 3 shows a schematic flowchart of a secondary carrier configuration method applicable to a master centralized unit in a master base station corresponding to a user equipment (UE);
FIG. 4 is a flowchart of a secondary carrier configuration method according to an embodiment of the present disclosure;
FIG. 5 shows a schematic flowchart of secondary carrier modification at a master distributed unit side;
FIG. 6 shows a schematic flowchart of forwarding uplink control information at a master distributed unit side;
FIG. 7 is a flowchart of another secondary carrier configuration method according to an embodiment of the present disclosure;
FIG. 8 shows a schematic flowchart of sending a secondary carrier setup success response message;
FIG. 9 shows a schematic flowchart of secondary carrier modification at a secondary distributed unit side;
FIG. 10 shows a schematic flowchart of forwarding uplink control information at a secondary distributed unit side;
FIG. 11 is a flowchart of another secondary carrier configuration method according to an embodiment of the present disclosure;
FIG. 12 is a block diagram of a master distributed unit according to an embodiment of the present disclosure;
FIG. 13 is a block diagram of a secondary distributed unit according to an embodiment of the present disclosure;
FIG. 14 is a block diagram of a master centralized unit according to an embodiment of the present disclosure;
FIG. 15 is a block diagram of a secondary carrier configuration system according to an embodiment of the present disclosure;
FIG. 16 is a block diagram of an electronic device according to an embodiment of the present disclosure.
FIG. 17 is a schematic diagram showing downlink offloading over cross-site secondary carriers according to a specific example of the present disclosure;
FIG. 18 is a schematic diagram of coordination link setup according to a specific example of the present disclosure;
FIG. 19 is a schematic diagram of a MAC layer downlink data AN feedback message flow for a base station deployment according to a specific example of the present disclosure; and
FIG. 20 is a flowchart of a cross-site secondary carrier setup and configuration process according to a specific example of the present disclosure.

### DETAIL DESCRIPTION OF EMBODIMENTS

To improve understanding of the technical solution of the present disclosure for those skilled in the art, the following describes the secondary carrier configuration method, unit and system, the electronic device and the storage medium according to the embodiments of the present disclosure in detail with reference to the accompanying drawings.

The present disclosure will be described more sufficiently below with reference to the accompanying drawings, where the illustrated embodiments may be embodied in different forms. However, the present disclosure should not be construed as being limited to the embodiments set forth herein. Rather, these embodiments are provided so that the present disclosure will be thorough and complete, and will fully convey the scope of the present disclosure to those skilled in the art.

Accompanying drawings are provided for further understanding of the embodiments of the present disclosure and constitute a part of the specification. Hereinafter, these drawings are intended to explain the present disclosure together with the detailed embodiments, but should not be considered as a limitation to the present disclosure. The above and other features and advantages will become more apparent to those skilled in the art by describing the detailed embodiments with reference to the accompanying drawings.

The present disclosure may be described with reference to plan and/or sectional views in idealized representations of the present disclosure. Accordingly, the example illustrations may be modified in accordance with the manufacturing process and/or the tolerance.

Embodiments of the present disclosure and features thereof may be combined with each other without conflict.

The terminology used herein is for the purpose of describing specific embodiments only and is not intended to limit the present disclosure. As used herein, the term "and/or" includes any and all combinations of one or more of the associated listed items. As used herein, the singular forms "a", "an" and "the" are intended to include the plural forms as well, unless the context clearly indicates otherwise. As used herein, the terms "comprise" and "consist of ..." specify the presence of the stated features, integers, steps, operations, elements, and/or components, but do not preclude the presence or addition of one or more other features, integers, steps, operations, elements, components, and/or groups thereof.

Unless otherwise defined, all terms (including technical and scientific terms) used in the present disclosure have the same meaning as commonly understood by one of ordinary skill in the art. It will be further understood that terms, such as those defined in commonly used dictionaries, should be interpreted as having a meaning that is consistent with their meaning in the context of the existing art and the present disclosure, and will not be interpreted in an idealized or overly formal sense unless expressly so defined in the present disclosure.

The present disclosure is not limited to the embodiments shown in the drawings, but includes modifications of configurations formed based on a manufacturing process. Therefore, the regions illustrated in the figures have schematic properties, and the shapes of the regions shown in the figures illustrate specific shapes of regions of elements, but are not intended to be limiting.

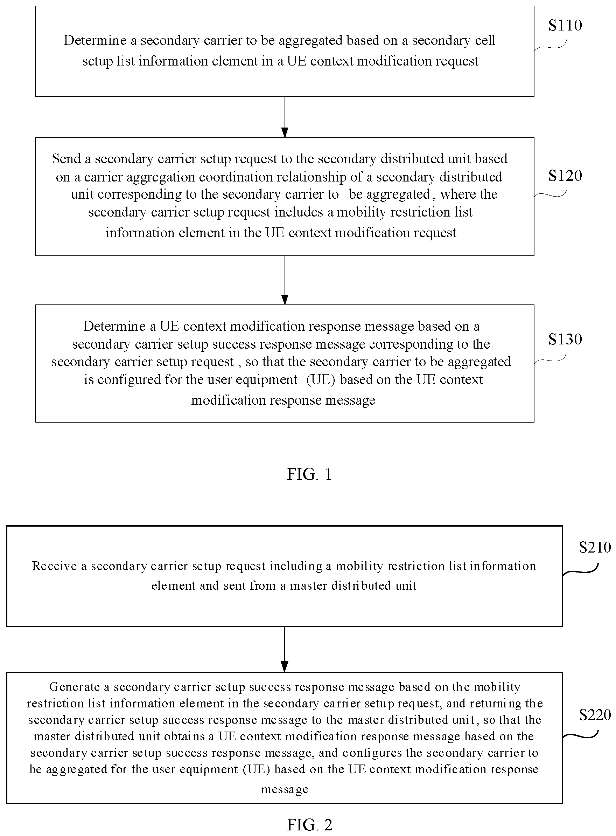

An embodiment of the present disclosure provides a secondary carrier configuration method applicable to a master distributed unit (DU) in a master base station corresponding to a user equipment (UE). FIG. 1 shows a flowchart of a secondary carrier configuration method applicable to a master distributed unit in a master base station corresponding to a user equipment (UE). As shown in FIG. 1, the method includes the following operations S110 to S130.

Operation S110 includes: determining a secondary carrier to be aggregated based on a secondary cell setup list information element in a UE context modification request.

The UE context modification request may be sent from a master centralized unit in the master base station. Correspondingly, a master distributed unit (DU) in the master base station receives the UE context modification request message sent from the master centralized unit in the master base station, and obtains a secondary cell setup list information element in the UE context modification request message.

The timing for the master centralized unit in the master base station to send the UE context modification request may be: when a UE accesses the master base station and a secondary carrier needs to be added, where the master centralized unit CU in the mast er base station may send a UE context modification request message to the master distributed unit DU in the master base station. The UE context modification request message carries necessary information for secondary carrier configuration, so that the master distributed unit DU implements a subsequent secondary carrier configuration process based on the information carried in the UE context modification request message. For example, the UE context modification request message carries a secondary cell setup list information element.

The secondary cell setup list information element contains information related to a secondary carrier to be aggregated. Therefore, based on the secondary cell setup list information element, the master distributed unit DU can determine the secondary carrier to be aggregated.

Operation S120 includes: sending a secondary carrier setup request to the secondary distributed unit based on a carrier aggregation coordination relationship of a secondary distributed unit corresponding to the secondary carrier to be aggregated, where the secondary carrier setup request includes a mobility restriction list information element in the UE context modification request.

The carrier aggregation coordination relationship (CA coordination relationship) refers to a collaborative working relationship between different carriers in carrier aggregation. In CA, it is necessary to ensure that each carrier operates coordinately to achieve a higher data transmission rate and better network performance. Correspondingly, in the case where it is determined that the master distributed unit DU and the secondary distributed unit DU have a CA coordination relationship based on the carrier aggregation coordination relationship of the secondary distributed unit corresponding to the secondary carrier to be aggregated, a secondary carrier setup request is sent to the secondary distributed unit.

The secondary distributed unit corresponding to the secondary carrier to be aggregated may be directly determined based on a preconfigured carrier aggregation coordination relationship. Since the carrier aggregation coordination relationship records a mapping relationship between secondary carriers and their corresponding secondary distributed units, the secondary distributed unit corresponding to the secondary carrier to be aggregated can be determined by obtaining the preconfigured carrier aggregation coordination relationship.

In this embodiment, the UE context modification request further includes a mobility restriction list information element; and correspondingly, the secondary carrier setup request includes a mobility restriction list information element in the UE context modification request.

The mobility restriction list information element characterizes a matching restriction condition corresponding to the UE context modification request message and configured to define whether the secondary distributed unit corresponding to the secondary carrier to be aggregated is matched with the master distributed unit in the master base station corresponding to the user equipment (UE). Any information that can be used to characterize the matching condition between the secondary distributed unit corresponding to the secondary carrier to be aggregated and the master distributed unit may be included in the mobility restriction list information element. For example, the mobility restriction list information element may include UE subscription information. By way of example, the mobility restriction list information element may include all NPN network subscription information of the UE.

Operation S130 includes: determining a UE context modification response message based on a secondary carrier setup success response message corresponding to the secondary carrier setup request, so that the secondary carrier to be aggregated is configured for the user equipment (UE) based on the UE context modification response message.

The secondary carrier setup success response message is sent by the secondary distributed unit, and based on the secondary carrier setup success response message, the secondary carrier configuration in the UE context modification response message can be determined. Correspondingly, the master centralized unit can configure the secondary carrier to be aggregated for the user equipment (UE) based on the UE context modification response message.

The secondary distributed unit corresponding to the secondary carrier to be aggregated is configured to determine whether to return the secondary carrier setup success response message according to the mobility restriction list information element. The mobility restriction list information element represents a matching restriction condition corresponding to the UE context modification request message and configured to define whether the secondary distributed unit corresponding to the secondary carrier to be aggregated is matched with the master distributed unit in the master base station corresponding to the user equipment (UE). Any information that can be used to characterize the matching condition between the secondary distributed unit corresponding to the secondary carrier to be aggregated and the master distributed unit may be included in the mobility restriction list information element. For example, the mobility restriction list information element may include UE subscription information. Correspondingly, the secondary distributed unit corresponding to the secondary carrier to be aggregated may match UE subscription information corresponding to the mobility restriction list information element with network configuration information supported by the secondary distributed unit, and determine whether to return the secondary carrier setup success response message based on a matching result.

It can be seen that according to this method, by adding a mobility restriction list information element to the UE context modification request message and taking the mobility restriction list information element as a matching criterion, the secondary distributed unit can directly determine whether to return the secondary carrier setup success response message to the master distributed unit based on the mobility restriction list information element in the secondary carrier setup request, so that the master distributed unit can return a UE context modification response message to the master centralized unit based on the secondary carrier setup success response message, thereby achieving the purpose of configuring the secondary carrier to be aggregated for the user equipment (UE). Therefore, with the help of the mobility restriction list information element, the secondary distributed unit can directly determine whether to return the secondary carrier setup success response message without the master centralized unit CU as a relay, thereby allowing direct communication between the master DU and the secondary DU as well as fast secondary carrier configuration. This method enables direct communication between the master distributed unit and the secondary distributed unit, improves the efficiency of data information transmission, and allows fast addition of a cross-site secondary carrier for a user equipment (UE), improves the service performance and efficiency, and significantly enhances the user experience.

In an optional implementation, to reasonably allocate communication resources and avoid communication interference, the secondary carrier setup request further includes: an initial radio dedicated admission resource of a primary carrier corresponding to the master distributed unit. Correspondingly, the secondary carrier setup success response message further includes: a radio dedicated admission resource of the secondary carrier obtained by staggering processing and corresponding to the secondary distributed unit.

In an optional implementation, in the case of a plurality of secondary carriers to be aggregated and a plurality of secondary distributed units corresponding to the secondary carriers to be aggregated, to implement direct communication between any two distributed units, before determining the UE context modification response message based on the secondary carrier setup success response message corresponding to the secondary carrier setup request, the following operation is further performed: based on a radio dedicated admission resource of the secondary carrier obtained by staggering processing and corresponding to each secondary distributed unit, performing time-domain staggering processing on the initial radio dedicated admission resource of the primary carrier corresponding to the master distributed unit, to obtain a radio dedicated admission resource of the primary carrier obtained by staggering processing and corresponding to the master distributed unit; generating coordination configuration information based on the radio dedicated admission resource of the primary carrier obtained by staggering processing and corresponding to the master distributed unit, and the radio dedicated admission resource of the secondary carrier obtained by staggering processing and corresponding to each secondary distributed unit, and generating a secondary carrier modification request message from the coordination configuration information; and sending the secondary carrier modification request message to each secondary distributed unit, and receiving a secondary carrier modification response message returned from the secondary distributed unit. It can be seen that according to this method, since the secondary carrier modification request message is generated from the coordination configuration information, and the coordination configuration information includes basic information required for two distributed units to communicate with each other, each secondary distributed unit can perform message communication based on the coordination configuration information.

In an optional implementation, the coordination configuration information may be generated by: obtaining an NR cell global identifier of the primary carrier corresponding to the master distributed unit, an NR cell global identifier of the secondary carrier corresponding to each secondary distributed unit, a serving cell index of the primary carrier corresponding to the master distributed unit, and a secondary cell setup list information element corresponding to each secondary distributed unit; and generating the coordination configuration information based on the radio dedicated admission resource of the primary carrier obtained by staggering processing and corresponding to the master distributed unit, the radio dedicated admission resource of the secondary carrier obtained by staggering processing and corresponding to each secondary distributed unit, the NR cell global identifier of the primary carrier corresponding to the master distributed unit, the NR cell global identifier of the secondary carrier corresponding to each secondary distributed unit, the serving cell index of the primary carrier corresponding to the master distributed unit, and the secondary cell setup list information element corresponding to each secondary distributed unit. The coordination configuration information is configured to implement message communication between medium access control (MAC) layers of any two distributed units. It can be seen that in this method, in addition to the radio dedicated admission resource of the primary carrier obtained by staggering processing and corresponding to the master distributed unit, and the radio dedicated admission resource of the secondary carrier obtained by staggering processing and corresponding to each secondary distributed unit, the coordination configuration information further includes the following four types of information: an NR cell global identifier of the primary carrier corresponding to the master distributed unit, an NR cell global identifier of the secondary carrier corresponding to each secondary distributed unit, a serving cell index of the primary carrier corresponding to the master distributed unit, and a secondary cell setup list information element corresponding to each secondary distributed unit. Since the coordination configuration information includes a larger amount of more comprehensive information, the connection between distributed units can be established more conveniently and accurately, thereby implementing message transmission between any two distributed units.

The above four types of information are all sent by the CU. For example, the NR cell global identifier of the primary carrier corresponding to the master distributed unit and the serving cell index of the primary carrier corresponding to the master distributed unit may be carried when the UE initially accesses the CU in the master base station; and the NR cell global identifier of the secondary carrier corresponding to each secondary distributed unit and the secondary cell setup list information element corresponding to each secondary distributed unit may be carried through a UE context modification request message transmitted over an F1 interface. In summary, the specific manner of obtaining the above four types of information is not limited in the present application, and embodiments of the present disclosure focus on generating the coordination configuration information from various information, thereby facilitating mutual communication between any two distributed units.

In an optional implementation, after receiving the secondary carrier modification response message returned from the secondary distributed unit, the following operation is further performed: in response to uplink control information of the user equipment (UE), determining, in the case where an information type of the uplink control information is a preset type, a primary or secondary carrier corresponding to the preset type of uplink control information; determining, based on the primary or secondary carrier corresponding to the preset type of uplink control information and the coordination configuration information in the secondary carrier modification request message, a secondary distributed unit corresponding to the preset type of uplink control information; and forwarding the preset type of uplink control information to the secondary distributed unit corresponding to the uplink control information. The uplink control information (UCI) is uplink control information fed back from the UE to the base station, and the preset type of uplink control information may include: CSI report and/or downlink data AN feedback information. In this method, when the preset type of uplink control information is received, the secondary distributed unit corresponding to the preset type of uplink control information can be determined based on the coordination configuration information, thereby implementing communication with the secondary distributed unit and forwarding the preset type of uplink control information to the secondary distributed unit corresponding to the uplink control information. It can be seen that by means of the coordination configuration information, direct communication between two distributed units can be implemented.

In an optional implementation, the method further includes: in the case where the master distributed unit receives a data transmission instruction, performing data transmission with a radio link control (RLC) layer deployment module in the secondary distributed unit based on a communication address of the RLC layer deployment module of the secondary carrier. It can be seen that this embodiment can implement data transmission between the master distributed unit and any secondary distributed unit based on the communication address of the RLC layer deployment module. For example, the secondary carrier setup request may further include: a communication address of the RLC layer deployment module of the primary carrier in the master distributed unit; and the secondary carrier setup response message may further include: a communication address of the RLC layer deployment module of the secondary carrier in the secondary distributed unit corresponding to the secondary carrier. Accordingly, data transmission between the master distributed unit and the RLC layer deployment module in any secondary distributed unit can be implemented based on the communication address of the RLC layer deployment module.

Another embodiment of the present application further provides a secondary carrier configuration method applicable to a secondary distributed unit. FIG. 2 shows a schematic flowchart of a secondary carrier configuration method applicable to a secondary distributed unit. As shown in FIG. 2, the method includes the following operations S210 and S220.

Operation S210 includes: receiving a secondary carrier setup request including a mobility restriction list information element and sent from a master distributed unit.

This operation is executed by the secondary distributed unit, and the secondary carrier setup request may be generated by: receiving, by the master distributed unit, the UE context modification request message sent from the master centralized unit in the master base station, and obtaining a secondary cell setup list information element and a mobility restriction list information element in the UE context modification request message; and determining a secondary carrier to be aggregated based on the secondary cell setup list information element, and generating the secondary carrier setup request in the case where the secondary distributed unit corresponding to the secondary carrier to be aggregated has a carrier aggregation coordination relationship with the master distributed unit.

Operation S220 includes: generating a secondary carrier setup success response message based on the mobility restriction list information element in the secondary carrier setup request, and returning the secondary carrier setup success response message to the master distributed unit, so that the master distributed unit obtains a UE context modification response message based on the secondary carrier setup success response message, and configures the secondary carrier to be aggregated for the user equipment (UE) based on the UE context modification response message.

The secondary distributed unit determines whether to return the secondary carrier setup success response message according to the mobility restriction list information element. The mobility restriction list information element represents a matching restriction condition corresponding to the UE context modification request message and configured to define whether the secondary distributed unit corresponding to the secondary carrier to be aggregated is matched with the master distributed unit in the master base station corresponding to the user equipment (UE). Any information that can be used to characterize the matching condition between the secondary distributed unit corresponding to the secondary carrier to be aggregated and the master distributed unit may be included in the mobility restriction list information element. For example, the mobility restriction list information element may include UE subscription information, and correspondingly, the secondary distributed unit corresponding to the secondary carrier to be aggregated may match UE subscription information corresponding to the mobility restriction list information element with network configuration information supported by the secondary distributed unit, and determine whether to return the secondary carrier setup success response message based on a matching result.

In an optional implementation, while generating the secondary carrier setup success response message based on the mobility restriction list information element, UE subscription information corresponding to the mobility restriction list information element is matched with network configuration information supported by a secondary carrier corresponding to the secondary distributed unit, and the secondary carrier setup success response message is generated based on a matching result. The UE subscription information characterizes whether the user equipment (UE) supports a non-public network (NPN), as well as a type of the supported NPN. The network configuration information represents a network type of the secondary carrier corresponding to the secondary distributed unit. For example, the network configuration information represents whether the secondary carrier corresponding to the secondary distributed unit is an NPN CAG (closed access group)-only cell or a CAG cell, as well as a type of the supported NPN.

In an optional implementation, matching UE subscription information corresponding to the mobility restriction list information element with network configuration information supported by the secondary carrier corresponding to the secondary distributed unit, and generating the secondary carrier setup success response message based on the matching result specifically includes: obtaining a user group identifier in the UE subscription information corresponding to the mobility restriction list information element, and a user group identifier in the network configuration information supported by the secondary carrier corresponding to the secondary distributed unit; matching the user group identifier in the UE subscription information corresponding to the mobility restriction list information element with the user group identifier in the network configuration information; and if a matching result indicates that the matching is successful, generating the secondary carrier setup success response message according to the matched user group identifier.

In an optional implementation, obtaining the user group identifier in the UE subscription information corresponding to the mobility restriction list information element, and the user group identifier in the network configuration information supported by the secondary carrier corresponding to the secondary distributed unit includes: judging, based on the UE subscription information, whether the user equipment (UE) supports a non-public network (NPN), and judging, based on the network configuration information, whether the secondary carrier corresponding to the secondary distributed unit is a preset type user group cell, and obtaining judgment results; in the case where the judgment results satisfy a preset condition, obtaining a user group identifier in the UE subscription information corresponding to the mobility restriction list information element, and a user group identifier in the network configuration information supported by the secondary carrier corresponding to the secondary distributed unit.

Specifically, the user group identifier may be: PLMN information and an NPN network identifier for a user equipment (UE) that supports an NPN network; or public land mobile network (PLMN) information for a general UE.

The preset condition includes: the user equipment (UE) supports a non-public network (NPN), and the secondary carrier corresponding to the secondary distributed unit belongs to the first preset type user group cell; or, the user equipment (UE) does not support a non-public network (NPN), and the secondary carrier corresponding to the secondary distributed unit is a second preset type user group cell.

For example, the following three situations all satisfy the preset condition:
in a first situation, the user equipment (UE) supports a stand-alone non-public network (SNPN), and the first preset type user group cell is an SNPN cell;
in a second situation, the user equipment (UE) supports a public network integrated non-public network (PNI-NPN), and the first preset type user group cell is a CAG-only cell or a CAG cell; and
in a third situation, the user equipment (UE) does not support any NPN (i.e., the user equipment (UE) is a general UE), and the second preset type user group cell is a CAG cell or a normal cell.

In an optional implementation, the secondary carrier setup success response message is returned to the master distributed unit by: obtaining an initial radio dedicated admission resource of the primary carrier corresponding to the master distributed unit and included in the secondary carrier setup request; performing time-domain staggering processing on an initial radio dedicated admission resource of a secondary carrier corresponding to the secondary distributed unit based on the initial radio dedicated admission resource of the primary carrier corresponding to the master distributed unit, to obtain a radio dedicated admission resource of the secondary carrier obtained by staggering processing and corresponding to the secondary distributed unit; returning, to the master distributed unit, the secondary carrier setup success response message including the radio dedicated admission resource of the secondary carrier obtained by staggering processing and corresponding to the secondary distributed unit.

In an optional implementation, the secondary distributed unit includes: a secondary distributed unit corresponding to the secondary carrier to be aggregated. Correspondingly, after returning, to the master distributed unit, the secondary carrier setup success response message including the radio dedicated admission resource of the secondary carrier obtained by staggering processing and corresponding to the secondary distributed unit, the method further includes obtaining coordination configuration information in a secondary carrier modification request message of the master distributed unit; and implementing message communication between MAC layers of any two distributed units based on the coordination configuration information. The specific manner of generating the coordination configuration information may refer to the description of the corresponding part in the previous embodiment, which will not be repeated here.

In an optional implementation, after returning the secondary carrier modification response message to the master distributed unit, the following operation is further performed: in response to uplink control information of the user equipment (UE), determining, in the case where an information type of the uplink control information is a preset type, a primary or secondary carrier corresponding to the preset type of uplink control information; determining, based on the primary or secondary carrier corresponding to the preset type of uplink control information and the coordination configuration information, a master or secondary distributed unit corresponding to the preset type of uplink control information; and forwarding the preset type of uplink control information to the master or secondary distributed unit corresponding to the preset type of uplink control information.

In an optional implementation, the method further includes the operation of: in the case where the secondary distributed unit receives a data transmission instruction, performing data transmission with an RLC layer deployment module in the master distributed unit based on a communication address of the RLC layer deployment module of the primary carrier.

In an optional implementation, the UE context modification request message further includes: a secondary cell to be setup cause value. Correspondingly, during configuration of the secondary carrier to be aggregated for the user equipment (UE) based on the UE context modification response message, a priority of secondary carrier configuration may be determined based on the secondary cell to be setup cause value; and the secondary carrier to be aggregated is configured for the user equipment (UE) based on the priority of the secondary carrier configuration.

In an optional implementation, the secondary cell to be setup cause value includes at least one of: a first type cause value corresponding to resource congestion on a master base station side; a second type cause value corresponding to a service volume of the user equipment (UE); a third type cause value corresponding to a service type of the user equipment (UE); a fourth type cause value corresponding to estimated maximization of cell spectral efficiency; a fifth type cause value corresponding to signal measurement; or a sixth type cause value corresponding to other causes.

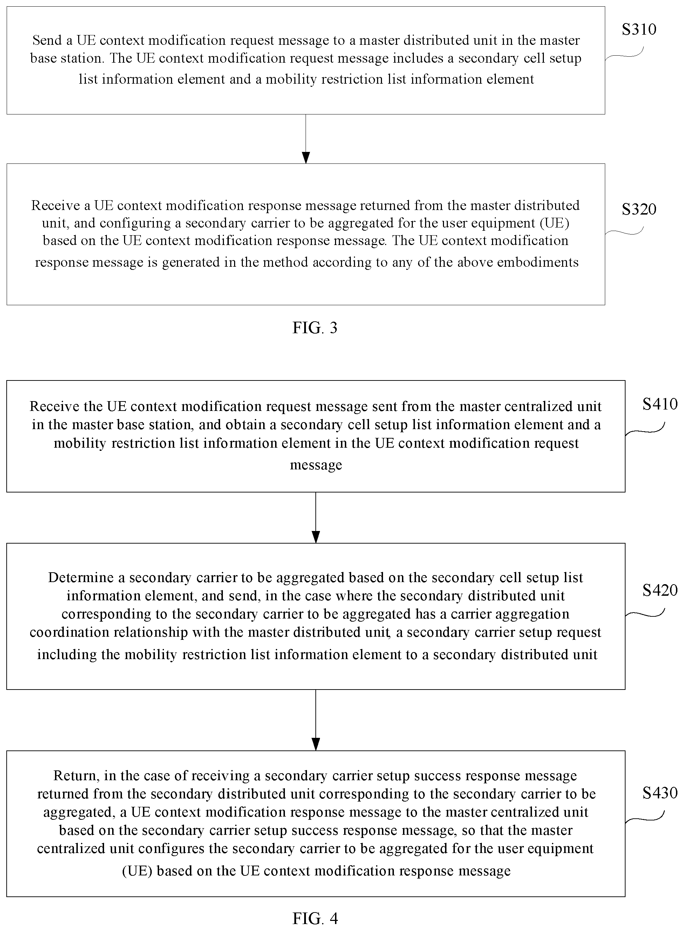

Another embodiment of the present application further provides a secondary carrier configuration method applicable to a master centralized unit in a master base station corresponding to a user equipment (UE). FIG. 3 shows a schematic flowchart of a secondary carrier configuration method applicable to a master centralized unit in a master base station corresponding to a user equipment (UE). As shown in FIG. 3, the method includes the following operations S310 and S320.

Operation S310 includes: sending a UE context modification request message to a master distributed unit in the master base station. The UE context modification request message includes a secondary cell setup list information element and a mobility restriction list information element.

Operation S320 includes: receiving a UE context modification response message returned from the master distributed unit, and configuring a secondary carrier to be aggregated for the user equipment (UE) based on the UE context modification response message. The UE context modification response message is generated in the method according to any of the above embodiments.

In an optional implementation, before sending the UE context modification request message to the master distributed unit in the master base station, the method further includes obtaining and adding the mobility restriction list information element to the UE context modification request message, so that the UE context modification request message includes the mobility restriction list information element.

The implementations of the above method will be described below with reference to the accompanying drawings:
In some existing arts, when a user equipment (UE) accesses a base station, a central unit (CU) sends a UE context setup request message (UE CONTEXT SETUP REQUEST, a signaling message in 3GPP 38.473 for establishing a UE instance context at a DU side) via an F1 interface to instruct a distributed unit (DU) to establish and configure all the indicated secondary carriers. After the corresponding secondary carrier is successfully configured at the DU side, the DU returns a UE context setup response message (UE CONTEXT SETUP RESPONSE) carrying a secondary carrier configuration information result to the CU, where upon obtaining the UE context setup response message, the CU further configures the message to the UE (terminal) through RRC reconfiguration (a signaling message in 3GPP 38.331). In the existing art, during configuration of a cross-site secondary carrier, signaling message transmission between cross-site DUs can be implemented only with the CU as a relay, resulting in a longer latency compared with direct communication between DUs, which is adverse to MAC layer scheduling, affects the user traffic, and further reduces the user experience. To solve the above problem, an embodiment of the present disclosure provides a secondary carrier configuration method, unit and system, an electronic device, and a storage medium improve the efficiency of cross-site secondary carrier configuration by allowing direct communication between DUs, thereby improving the efficiency of data information transmission and improving the user experience.

FIG. 4 is a flowchart of a secondary carrier configuration method according to an embodiment of the present disclosure. Referring to FIG. 4, an embodiment of the present disclosure provides a secondary carrier configuration method applicable to a master distributed unit in a master base station corresponding to a user equipment (UE). The method includes operations S410 to S430.

Operation S410 includes: receiving the UE context modification request message sent from the master centralized unit in the master base station, and obtaining a secondary cell setup list information element and a mobility restriction list information element in the UE context modification request message.

A base station is a public mobile communication base station, which is an interface device for mobile devices to access the internet and a form of radio station. It refers to a radio transceiver station that transfer information with a mobile phone terminal through a mobile communication switching center within a certain radio coverage area.

The 5th generation mobile communication technology (5G, also referred to as NR, New Radio) is a new generation of broadband mobile communication technology characterized by high speed, low latency, and large connection. 5G communication facilities are the network infrastructure for interconnection among human, machines, and things. A 5G base station (the next Generation Node B, gNB) is a core device of a 5G network which provides wireless coverage and implement wireless signal transmission between a wired communication network and a wireless terminal.

The gNB function of 5G is reconstructed into two functional entities: a centralized unit (CU) and a distributed unit (DU). In a specific implementation, the CU device is implemented by a general-purpose platform, which mainly includes non-real-time radio high-layer protocol stack functions that not only support wireless network functions, but also have the capabilities of supporting core network functions and edge applications. The DU device is implemented by a dedicated platform or a general-purpose + dedicated hybrid platform, which supports high-density mathematical computing power, and mainly processes physical layer functions and real-time Layer 2 (data link layer) functions.

Each base station includes only one centralized unit, while one centralized unit may control a plurality of distributed units. Therefore, in the case of determining a master centralized unit (master CU) and a master distributed unit (master DU) in the master base station (master gNB) corresponding to a user equipment (UE), other DUs in the master gNB and DUs in other gNBs are all secondary distributed units (secondary DUs).

Each distributed unit (DU) can support one or more cells. A cell refers to a wireless coverage area identified by a base station identity code (BSIC) or a cell global identifier (CGI).

In the process of networking deployment by operators, due to different coverage capabilities of different frequency bands, some terminals are often simultaneously covered by carriers from different stations, which poses a need to add cross-site secondary carriers from the perspective of carrier aggregation. In the process of adding a secondary carrier for a user equipment (UE), when the UE accesses the master gNB composed of the master CU and the master DU, the master CU sends a UE context modification request message to the corresponding master DU through an F1 interface.

The UE context modification request message (UE CONTEXT MODIFICATION REQUEST) is a signaling message in 3GPP 38.473 for modifying the UE context at the DU side. The UE context modification request message carries a secondary cell to be setup list (SCell To Be Setup List) information element and a mobility restriction list (3GPP 38.423) information element.

The secondary cell to be setup list includes information related to a secondary carrier to be aggregated, including: a secondary cell index (sCell Index, 3GPP 38.473) of the secondary carrier to be aggregated, an NR cell global identifier (NR CGI) and a CA type (whether uplink CA is supported) of the secondary carrier to be aggregated, and a serving cell measurement object (servingCellMo, 3GPP 38.473), and the like.

Operation S420 includes: determining a secondary carrier to be aggregated based on the secondary cell setup list information element, and sending, in the case where the secondary distributed unit corresponding to the secondary carrier to be aggregated has a carrier aggregation coordination relationship with the master distributed unit, a secondary carrier setup request including the mobility restriction list information element to a secondary distributed unit.

Based on the carrier-related information in the secondary cell setup list information element, the secondary carrier to be aggregated and its corresponding gNB and CA type are determined.

The carrier aggregation coordination relationship (CA coordination relationship) refers to a collaborative working relationship between different carriers in carrier aggregation. In CA, it is necessary to ensure that each carrier operates coordinately to achieve a higher data transmission rate and better network performance. For two cells respectively supported by the master DU and the secondary DU, the carrier corresponding to the secondary DU is added as a secondary carrier for the UE corresponding to the master DU only when the master DU and the secondary DU have a CA coordination relationship. In other words, whether cross-site DUs have a CA coordination relationship determines whether the master DU can communicate with the secondary DU. Before the process of configuring and adding the secondary carrier, a CA coordination relationship between the master DU and other DUs is pre-established so that in operation S420, it is judged whether the secondary DU corresponding to the secondary carrier to be aggregated has a pre-established CA coordination relationship with the master DU.

The secondary carrier setup request includes: a secondary cell setup list information element, a mobility restriction list information element, an identifier (Global gNB ID) of the base station to which the master DU belongs, an identifier (Global gNB ID) of the base station to which the secondary DU belongs, an NR cell global identifier (NR CGI) of a primary carrier corresponding to the master DU, UE capability information, and UE radio bearer configuration information in the secondary carrier corresponding to the secondary DU (the bearer configuration content is aligned with RLC-BearerConfig in the 3GPP 38.331 protocol).

Operation S430 includes: returning, in the case of receiving a secondary carrier setup success response message returned from the secondary distributed unit corresponding to the secondary carrier to be aggregated, a UE context modification response message to the master centralized unit based on the secondary carrier setup success response message, so that the master centralized unit configures the secondary carrier to be aggregated for the user equipment (UE) based on the UE context modification response message.

The secondary distributed unit corresponding to the secondary carrier to be aggregated is configured to match UE subscription information corresponding to the mobility restriction list information element with network configuration information supported by the secondary distributed unit, and determine whether to return the secondary carrier setup success response message based on a matching result. The UE subscription information corresponding to the mobility restriction list is used as a criterion for judging whether the secondary carrier to be aggregated can be added and configured as a secondary carrier for the current UE.

In an optional implementation, the UE subscription information represents whether the user equipment (UE) supports a non-public network (NPN), as well as a type of the supported NPN; and the network configuration information represents whether the secondary carrier corresponding to the secondary distributed unit is an NPN CAG-only cell or a CAG cell, as well as a type of the supported NPN. A CAG (closed access group) cell refers to a cell in which normal communication services are available to CAG members within a coverage thereof. An NPN CAG-only cell is an NPN-only private network cell defined in 3GPP 38.300 and 38.331 protocols. Moreover, in the case of successful matching, the UE NPN network identifier and public land mobile network (PLMN) corresponding to the matched user equipment (UE), so that in a scenario where a public network (or a public network supporting network sharing) and an NPN private network coexist, admission is performed according to the matched UE NPN network identifier and PLMN to obtain the corresponding base station configuration information. The base station configuration information characterizes a radio resource allocation ratio of the secondary carrier corresponding to the secondary distributed unit.

In an optional implementation, the matching result specifically includes a result of matching and admission between the UE subscription information corresponding to the mobility restriction list information element and the network configuration information supported by the secondary carrier corresponding to the secondary DU. In the case where the matching and admission between the UE subscription information corresponding to the mobility restriction list information element and the network configuration information supported by the secondary carrier corresponding to the secondary DU is successful (at least one secondary carrier in the secondary DU is matched and admitted successfully), the master DU receives a secondary carrier setup success response message returned from the secondary DU corresponding to the secondary carrier to be aggregated. Otherwise, the master DU receives a secondary carrier setup failure response message returned from the secondary DU corresponding to the secondary carrier to be aggregated. The secondary carrier setup success response message indicates that a connection is successfully established between the master DU and the secondary DU, and then the process of adding the carrier corresponding to the secondary DU as a secondary carrier for the UE corresponding to the master DU can be completed through subsequent operations.

The UE context modification response message (UE CONTEXT MODIFICATION RESPONSE) is a feedback message corresponding to the UE context modification request message (UE CONTEXT MODIFICATION REQUEST), and used by the master DU to feed back to the master CU information related to the cross-site secondary carrier corresponding to the secondary DU for which the connection has been established.

In summary, the embodiment of the present disclosure provides a secondary carrier configuration method applicable to a master distributed unit in a master base station corresponding to a user equipment (UE), which includes: first, receiving the UE context modification request message sent from the master centralized unit in the master base station, and obtaining a secondary cell setup list information element and a mobility restriction list information element in the UE context modification request message; second, determining a secondary carrier to be aggregated based on the secondary cell setup list information element, and sending, in the case where the secondary distributed unit corresponding to the secondary carrier to be aggregated has a carrier aggregation coordination relationship with the master distributed unit, a secondary carrier setup request including the mobility restriction list information element to a secondary distributed unit; and finally, returning, in the case of receiving a secondary carrier setup success response message returned from the secondary distributed unit corresponding to the secondary carrier to be aggregated, a UE context modification response message to the master centralized unit based on the secondary carrier setup success response message, so that the master centralized unit configuring a secondary carrier to be aggregated for the user equipment (UE) based on the UE context modification response message. The secondary distributed unit corresponding to the secondary carrier to be aggregated is configured to match UE subscription information corresponding to the mobility restriction list information element with network configuration information supported by the secondary distributed unit, and determine whether to return the secondary carrier setup success response message based on a matching result. It can be seen that according to this method, by adding a mobility restriction list information element to the UE context modification request message and taking the UE subscription information corresponding to the mobility restriction list information element as a matching criterion, the network configuration information supported by the secondary distributed unit is matched to implement direct communication between the master distributed unit and the secondary distributed unit, thereby improving the efficiency of data information transmission and allowing fast addition of a cross-site secondary carrier for a user equipment (UE), improving the service performance and efficiency, and significantly enhancing the user experience. Therefore, this method is applicable to various distributed radio access network (DRAN) and centralized radio access network (CRAN) networking scenarios, and enables fast configuration of multiple cross-site secondary carriers, thereby significantly improving the user experience.

In an optional implementation, the UE subscription information represents whether the user equipment (UE) supports a non-public network (NPN), as well as a type of the supported NPN; and the network configuration information represents whether the secondary carrier corresponding to the secondary distributed unit is an NPN CAG-only cell or a CAG cell, as well as a type of the supported NPN. Therefore, the UE subscription information specifically includes the subscribed UE NPN network identifier information or PLMN information. Moreover, the matching result specifically includes a result of matching and admission between the UE subscription information corresponding to the mobility restriction list information element and the network configuration information supported by the secondary carrier corresponding to the secondary DU.

Therefore, matching UE subscription information corresponding to the mobility restriction list information element with network configuration information supported by the secondary carrier corresponding to the secondary distributed unit, and determining whether to return the secondary carrier setup success response message based on the matching result may be specifically implemented as follows:

First, based on the UE subscription information, it is determined whether the user equipment (UE) supports a non-public network (NPN).

If the user equipment (UE) supports a non-public network (NPN), an NPN network identifier and a PLMN in the UE subscription information corresponding to the mobility restriction list information element are obtained; and if the user equipment (UE) does not support a non-public network (NPN), a PLMN in the UE subscription information corresponding to the mobility restriction list information element is obtained.

Second, based on the network configuration information, it is determined whether the secondary carrier corresponding to the secondary distributed unit is an NPN CAG-only cell or a CAG cell.

If the secondary carrier corresponding to the secondary distributed unit is an NPN CAG-only cell or a CAG cell, a NPN network identifier and a PLMN in the network configuration information supported by the secondary carrier corresponding to the secondary distributed unit are obtained.

Finally, for a user equipment (UE) that supports an NPN network, the NPN network identifier and PLMN in the UE subscription information is matched with the NPN network identifier and PLMN in the network configuration information; and for a general UE, a serving PLMN of the UE is matched with the PLMN in the network configuration information (i.e., the PLMN in the UE subscription information is matched with the PLMN in the network configuration information). If the matching is successful, the secondary carrier is configured according to the matched "user group identifier" (i.e., the NPN network identifier and PLMN), and a secondary carrier setup success response message is returned. A non-public network (NPN) serves a private entity such as an enterprise, and may be specifically deployed as a completely independent network or managed by a PLMN and provide services according to the PLMN. According to requirements of the NPN network, a UE that is not subscribed and authorized cannot attempt to access the NPN network; or it may further restrict that a UE that supports only the NPN cannot access a public network. In addition, it may also be the case that an authorized UE is allowed to access both a public network and the NPN network. In the current 3GPP standards, NPN networks include two types: public network integrated non-public network (PNI-NPN), and stand-alone non-public network (SNPN).

It can be seen that according to the secondary carrier configuration method in the above embodiments, in a scenario where a public network and a non-public network (NPN) coexist, fast addition of a cross-site secondary carrier can be implemented through direct communication between the master DU and the secondary DU, thereby further expanding the usage scenarios of the secondary carrier configuration method according to the embodiments of the present disclosure.

In an optional implementation, to reasonably allocate communication resources and avoid communication interference, the secondary carrier setup request further includes: an initial radio dedicated admission resource of a primary carrier corresponding to the master distributed unit, and radio dedicated admission resources of other carriers. The secondary carrier setup success response message further includes: a radio dedicated admission resource of the secondary carrier obtained by staggering processing and corresponding to the secondary distributed unit.

The radio dedicated admission resource of the secondary carrier obtained by staggering processing and corresponding to the secondary distributed unit is obtained by: based on the initial radio dedicated admission resource of a primary carrier corresponding to the master distributed unit, and radio dedicated admission resources of other carriers, performing, by the secondary distributed unit, time-domain staggering processing on the initial radio dedicated admission resource of the secondary carrier corresponding to the secondary distributed unit, to obtain the radio dedicated admission resource of the secondary carrier obtained by staggering processing and corresponding to the secondary distributed unit.

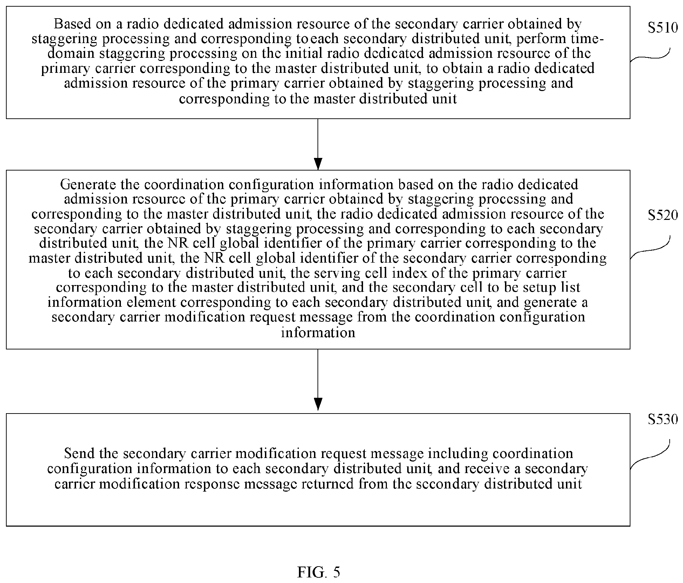

In an optional implementation, in the case of a plurality of secondary carriers to be aggregated and a plurality of secondary distributed units corresponding to the secondary carriers to be aggregated, to implement direct communication between secondary distributed units, before returning the UE context modification response message to the master centralized unit based on the secondary carrier setup success response message, a secondary carrier modification process is further performed, which is schematically shown in FIG. 5 and specifically includes the following operations S510 to S530.

Operation S510 includes: based on a radio dedicated admission resource of the secondary carrier obtained by staggering processing and corresponding to each secondary distributed unit, performing time-domain staggering processing on the initial radio dedicated admission resource of the primary carrier corresponding to the master distributed unit, to obtain a radio dedicated admission resource of the primary carrier obtained by staggering processing and corresponding to the master distributed unit.

Operation S520 includes: generating the coordination configuration information based on the radio dedicated admission resource of the primary carrier obtained by staggering processing and corresponding to the master distributed unit, the radio dedicated admission resource of the secondary carrier obtained by staggering processing and corresponding to each secondary distributed unit, the NR cell global identifier of the primary carrier corresponding to the master distributed unit, the NR cell global identifier of the secondary carrier corresponding to each secondary distributed unit, the serving cell index of the primary carrier corresponding to the master distributed unit, and the secondary cell setup list information element corresponding to each secondary distributed unit, and generating a secondary carrier modification request message from the coordination configuration information.

Operation S530 includes: sending the secondary carrier modification request message including coordination configuration information to each secondary distributed unit, and receiving a secondary carrier modification response message returned from the secondary distributed unit.

It can be seen that a secondary carrier configuration method is implemented, in which in the case of a plurality of secondary carriers to be aggregated and a plurality of secondary DUs corresponding to the secondary carriers to be aggregated, in addition to an initial radio dedicated admission resource of a primary carrier corresponding to the master distributed unit, each secondary carrier setup request sent to a target secondary DU further includes a radio dedicated admission resource of the added secondary carrier, so that the target secondary DU can perform time-domain staggering processing in view of the initial radio dedicated admission resource of the primary carrier corresponding to the master distributed unit, the radio dedicated admission resource of the added secondary carrier, and its own radio dedicated admission resource of the master, to obtain the radio dedicated admission resource of the secondary carrier obtained by staggering processing and corresponding to the target secondary DU, and return the same to the master DU. Further, the radio dedicated admission resource of the secondary carrier obtained by staggering processing and corresponding to the target secondary DU may be added to the secondary carrier setup request sent to a next target secondary DU, and the time-domain staggering processing and other operations are repeated in the next target secondary DU to obtain a radio dedicated admission resource of the secondary carrier obtained by staggering processing and corresponding to the next target secondary DU. Finally, the radio dedicated admission resource of the secondary carrier obtained by staggering processing and corresponding to each secondary DU is obtained. The above process allows direct communication between secondary DUs, and further improves the efficiency of data information transmission.

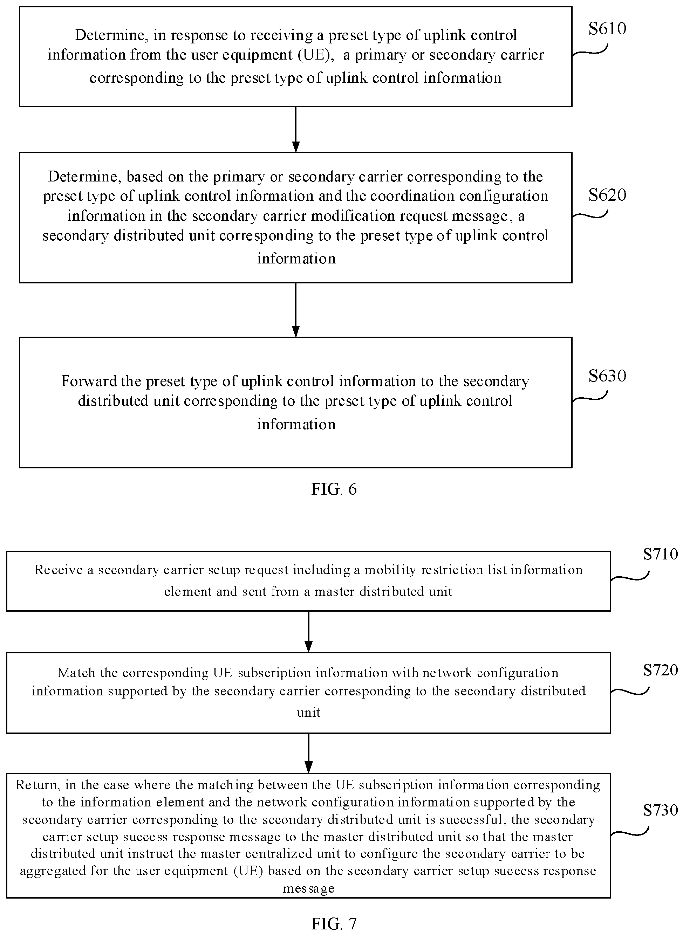

In an optional implementation, the coordination configuration information further includes a physical cell identifier and a carrier identifier of each secondary carrier to be aggregated, which are used for message communication between MAC layers of any two distributed units. To implement service coordination interaction between MAC layers of the user equipment (UE) and a DU based on the coordination configuration information, after receiving the secondary carrier modification response message returned from the secondary distributed unit, and when the secondary carrier of the user equipment (UE) is successfully configured and activated, and the user equipment (UE) generates a uplink or downlink service, an uplink control information forwarding process is further performed, which is schematically shown in FIG. 6 and includes operations S610 to S630.

Operation S610 includes: determining, in response to receiving a preset type of uplink control information from the user equipment (UE), a primary or secondary carrier corresponding to the preset type of uplink control information.

Operation S620 includes: determining, based on the primary or secondary carrier corresponding to the preset type of uplink control information and the coordination configuration information in the secondary carrier modification request message, a secondary distributed unit corresponding to the preset type of uplink control information.

Operation S630 includes: forwarding the preset type of uplink control information to the secondary distributed unit corresponding to the preset type of uplink control information.

In the secondary carrier configuration method implemented as above, the secondary carrier setup request further includes: PHY layer configuration information (PhysicalCellGroupConfig information, corresponding to an information element in the 3GPP 38.331 protocol, which refers to secondary station physical layer configuration of the UE secondary carrier) and MAC layer configuration information (MAC-CellGroupConfig information, corresponding to an information element in the 3GPP 38.331 protocol, which refers to medium access control layer configuration of the UE secondary carrier) of the UE secondary carrier in the secondary DU at the base station side, and a cell radio network temporary identifier (C-RNTI, 3GPP cell radio network temporary identifier).

The uplink control information (UCI) is uplink control information fed back from the UE to the base station, including channel state information (CSI), acknowledgement/negative acknowledgement (ACK/NACK), and scheduling request (SR). The uplink control information carrying CSI content includes an identifier of the added and configured UE carrier (including the primary or secondary carrier). In an optional implementation, the preset type of uplink control information includes: CSI report and/or downlink data AN feedback information.

It can be seen that according to the secondary carrier configuration method implemented as above, a coordination link may be established between MAC layers of DUs to implement direct communication between MAC layers of a master DU and a secondary DU, or between secondary DUs, which facilitates faster transmission of subsequent internal UE scheduling information at the MAC layers, and thus improves the user traffic.

In an optional implementation, the secondary carrier setup request may further include: a communication address (IP address) of the RLC layer deployment module of the primary carrier included in the master distributed unit; and the secondary carrier setup success response message further includes: a communication address of the RLC layer deployment module of the secondary carrier in the secondary distributed unit corresponding to the secondary carrier.

The communication address of the RLC layer deployment module is configured to implement data transmission between the RLC layer deployment modules in the master distributed unit and any secondary distributed unit.

It can be seen that according to the secondary carrier configuration method implemented as above, by implementing direct communication between DUs at the signaling level, the master DU can obtain the IP address of the secondary carrier configured for the secondary DU, thereby implementing direct data communication between RLC layers of DUs. For example, when the secondary carrier addition and configuration process is completed, direct data packet transmission can be implemented, and in the presence of uplink or downlink services, offloading can be performed based on the IP address.

In an optional implementation, the UE context modification request message further includes: a secondary cell to be setup cause value, which includes at least one of: a first type cause value corresponding to resource congestion on a master base station side, a second type cause value corresponding to a service volume of the user equipment (UE), a third type cause value corresponding to a service type of the user equipment (UE), a fourth type cause value corresponding to estimated maximization of cell spectral efficiency, a fifth type cause value corresponding to signal measurement, or a sixth type cause value corresponding to other causes. The secondary cell to be setup cause value is configured to determine a priority of secondary carrier configuration. When the function of adding a UE secondary cell that integrates multiple secondary cell setup reasons

is enabled, resource priority admission of the DU at the secondary base station side is achieved by transferring the secondary cell to be setup cause value.

FIG. 7 is a flowchart of another secondary carrier configuration method according to an embodiment of the present disclosure. Referring to FIG. 7, an embodiment of the present disclosure provides a secondary carrier configuration method applicable to the secondary distributed unit, which includes operations S710 to S730.

Operation S710 includes: receiving a secondary carrier setup request including a mobility restriction list information element and sent from a master distributed unit.

The secondary carrier setup request is generated by: receiving, by the master distributed unit, the UE context modification request message sent from the master centralized unit in the master base station, and obtaining a secondary cell setup list information element and a mobility restriction list information element in the UE context modification request message; and determining a secondary carrier to be aggregated based on the secondary cell setup list information element, and generating the secondary carrier setup request in the case where the secondary distributed unit corresponding to the secondary carrier to be aggregated has a carrier aggregation coordination relationship with the master distributed unit.

Operation S720 includes: matching the corresponding UE subscription information with network configuration information supported by the secondary carrier corresponding to the secondary distributed unit.

Operation S730 includes: returning, in the case where the matching between the UE subscription information corresponding to the information element and the network configuration information supported by the secondary carrier corresponding to the secondary distributed unit is successful, the secondary carrier setup success response message to the master distributed unit so that the master distributed unit instruct the master centralized unit to configure the secondary carrier to be aggregated for the user equipment (UE) based on the secondary carrier setup success response message.

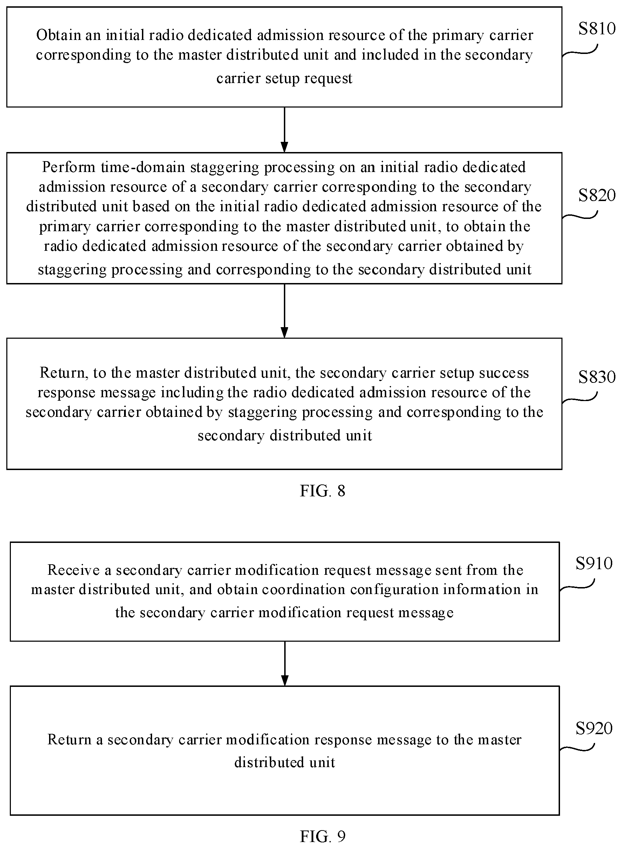

In an optional implementation, FIG. 8 shows a schematic flowchart of sending a secondary carrier setup success response message. As shown in FIG. 8, the operation S730 of returning the secondary carrier setup success response message to the master distributed unit may include the following operations S810 to S830.

Operation S810 includes: obtaining an initial radio dedicated admission resource of the primary carrier corresponding to the master distributed unit and included in the secondary carrier setup request.

Operation S820 includes: performing time-domain staggering processing on an initial radio dedicated admission resource of a secondary carrier corresponding to the secondary distributed unit based on the initial radio dedicated admission resource of the primary carrier corresponding to the master distributed unit, to obtain the radio dedicated admission resource of the secondary carrier obtained by staggering processing and corresponding to the secondary distributed unit.

Operation S830 includes: returning, to the master distributed unit, the secondary carrier setup success response message including the radio dedicated admission resource of the secondary carrier obtained by staggering processing and corresponding to the secondary distributed unit.

In an optional implementation, the secondary distributed unit includes: a secondary distributed unit corresponding to the secondary carrier to be aggregated.

Therefore, after returning, to the master distributed unit, the secondary carrier setup success response message including the radio dedicated admission resource of the secondary carrier obtained by staggering processing and corresponding to the secondary distributed unit, the secondary carrier modification process shown in FIG. 9 is further performed. As shown in FIG. 9, the secondary carrier modification process at the secondary distributed unit side includes the following operations S910 and S920.

Operation S910 includes: receiving a secondary carrier modification request message sent from the master distributed unit, and obtaining coordination configuration information in the secondary carrier modification request message.

Operation S920 includes: returning a secondary carrier modification response message to the master distributed unit.

The coordination configuration information includes a physical cell identifier and a carrier identifier of a secondary carrier to be aggregated, which are used for message communication between MAC layers of any two distributed units and may be generated by: performing, based on a radio dedicated admission resource of the secondary carrier obtained by staggering processing and corresponding to the secondary distributed unit, performing, by the master distributed unit, time-domain staggering processing on the initial radio dedicated admission resource of the primary carrier corresponding to the master distributed unit, to obtain a radio dedicated admission resource of the primary carrier obtained by staggering processing and corresponding to the master distributed unit; and generating the coordination configuration information based on the radio dedicated admission resource of the primary carrier obtained by staggering processing and corresponding to the master distributed unit, the radio dedicated admission resource of the secondary carrier obtained by staggering processing and corresponding to the secondary distributed unit, the NR cell global identifier of the primary carrier corresponding to the master distributed unit, the NR cell global identifier of the secondary carrier corresponding to the secondary distributed unit, the serving cell index of the primary carrier corresponding to the master distributed unit, and the secondary cell setup list information element corresponding to the secondary distributed unit.

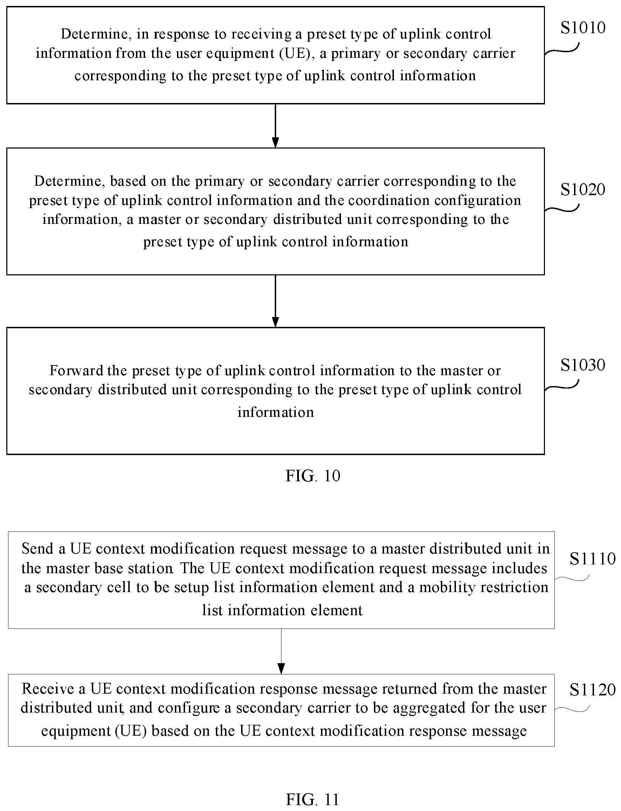

In an optional implementation, FIG. 10 shows a schematic flowchart of forwarding uplink control information at a secondary distributed unit side. Accordingly, after returning the secondary carrier modification response message to the master distributed unit, the method proceeds to the following operations S1010 to S1030.

Operation S1010 includes: determining, in response to receiving a preset type of uplink control information from the user equipment (UE), a primary or secondary carrier corresponding to the preset type of uplink control information.

Operation S1020 includes: determining, based on the primary or secondary carrier corresponding to the preset type of uplink control information and the coordination configuration information, a master or secondary distributed unit corresponding to the preset type of uplink control information.

Operation S1030 includes: forwarding the preset type of uplink control information to the master or secondary distributed unit corresponding to the preset type of uplink control information.

In an optional implementation, the secondary carrier setup request may further include: a communication address of the RLC layer deployment module of the primary carrier in the master distributed unit; and the secondary carrier setup success response message further includes: a communication address of the RLC layer deployment module of the secondary carrier in the secondary distributed unit corresponding to the secondary carrier. The communication address of the RLC layer deployment module is configured to implement data transmission between the RLC layer deployment modules in the master distributed unit and any secondary distributed unit.

The various operations in the above method embodiment applicable to a secondary distributed unit correspond to the operations in the above method embodiment applicable to a master distributed unit in a master base station corresponding to a user equipment (UE), and for specific implementations and details, reference may be made to the description of the corresponding part of the above method embodiment applicable to a master distributed unit in a master base station corresponding to a user equipment (UE), which will not be repeated here.

In a third aspect, FIG. 11 is a flowchart of another secondary carrier configuration method according to an embodiment of the present disclosure. Referring to FIG. 11, an embodiment of the present disclosure provides a secondary carrier configuration method applicable to a master centralized unit in a master base station corresponding to a user equipment (UE), which includes operations S1110 and S1120.

Operation S1110 includes: sending a UE context modification request message to a master distributed unit in the master base station. The UE context modification request message includes a secondary cell setup list information element and a mobility restriction list information element.

Operation S1120 includes: receiving a UE context modification response message returned from the master distributed unit, and configuring a secondary carrier to be aggregated for the user equipment (UE) based on the UE context modification response message.

The UE context modification response message is generated in the secondary carrier configuration method applicable to a master distributed unit in a master base station corresponding to a user equipment (UE) described above.

The various operations in the above method embodiment applicable to a master centralized unit in a master base station corresponding to a user equipment (UE) correspond to the operations in the above method embodiment applicable to a master distributed unit in a master base station corresponding to a user equipment (UE), and for specific implementations and meanings of terms therein, reference may be made to the description of the corresponding part of the above method embodiment applicable to a master distributed unit in a master base station corresponding to a user equipment (UE), which will not be repeated here.

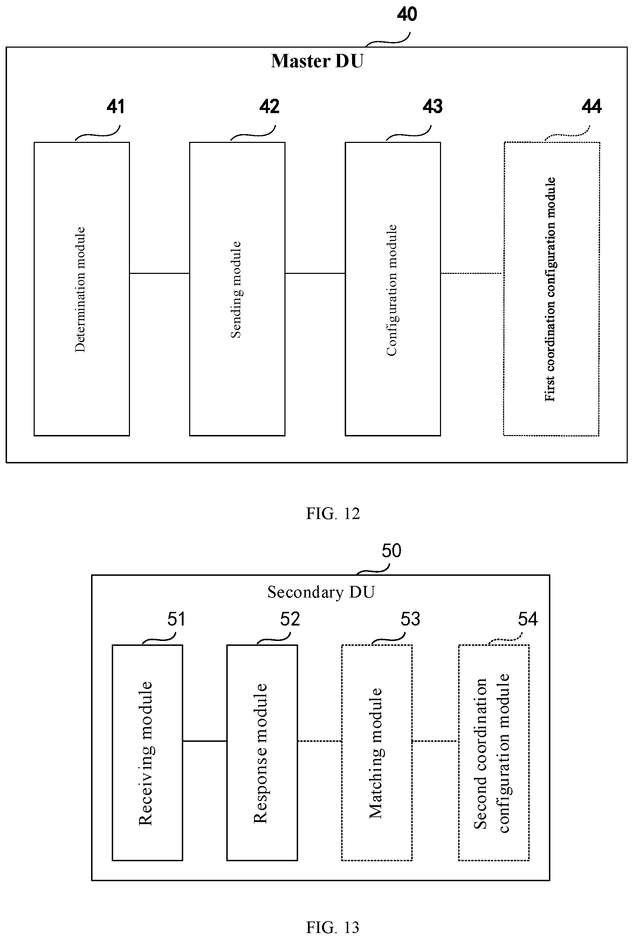

In a fourth aspect, FIG. 12 is a block diagram of a master distributed unit according to an embodiment of the present disclosure. Referring to FIG. 12, an embodiment of the present disclosure provides a master distributed unit 40, which may be included in a master base station corresponding to a user equipment (UE) and include:
a determination module 41 configured to determine a secondary carrier to be aggregated based on a secondary cell setup list information element in a UE context modification request;
a sending module 42 configured to send a secondary carrier setup request to the secondary distributed unit based on a carrier aggregation coordination relationship of a secondary distributed unit corresponding to the secondary carrier to be aggregated, where the secondary carrier setup request includes a mobility restriction list information element in the UE context modification request; and
a configuration module 43 configured to determine a UE context modification response message based on a secondary carrier setup success response message corresponding to the secondary carrier setup request, so that the secondary carrier to be aggregated is configured for the user equipment (UE) based on the UE context modification response message.

In an optional implementation, the secondary carrier setup request further includes: an initial radio dedicated admission resource of a primary carrier corresponding to the master distributed unit; and the secondary carrier setup success response message includes: a radio dedicated admission resource of the secondary carrier obtained by staggering processing and corresponding to the secondary distributed unit.

In an optional implementation, in the case of a plurality of secondary carriers to be aggregated and a plurality of secondary distributed units corresponding to the secondary carriers to be aggregated, the configuration module is further configured to:
based on a radio dedicated admission resource of the secondary carrier obtained by staggering processing and corresponding to each secondary distributed unit, perform time-domain staggering processing on the initial radio dedicated admission resource of the primary carrier corresponding to the master distributed unit, to obtain a radio dedicated admission resource of the primary carrier obtained by staggering processing and corresponding to the master distributed unit;
generate coordination configuration information based on the radio dedicated admission resource of the primary carrier obtained by staggering processing and corresponding to the master distributed unit, and the radio dedicated admission resource of the secondary carrier obtained by staggering processing and corresponding to each secondary distributed unit, and generate a secondary carrier modification request message from the coordination configuration information; and
send the secondary carrier modification request message to each secondary distributed unit, and receive a secondary carrier modification response message returned from the secondary distributed unit.

In an optional implementation, the configuration module is specifically configured to:
obtain an NR cell global identifier of the primary carrier corresponding to the master distributed unit, an NR cell global identifier of the secondary carrier corresponding to each secondary distributed unit, a serving cell index of the primary carrier corresponding to the master distributed unit, and a secondary cell setup list information element corresponding to each secondary distributed unit; and
generate the coordination configuration information based on the radio dedicated admission resource of the primary carrier obtained by staggering processing and corresponding to the master distributed unit, the radio dedicated admission resource of the secondary carrier obtained by staggering processing and corresponding to each secondary distributed unit, the NR cell global identifier of the primary carrier corresponding to the master distributed unit, the NR cell global identifier of the secondary carrier corresponding to each secondary distributed unit, the serving cell index of the primary carrier corresponding to the master distributed unit, and the secondary cell setup list information element corresponding to each secondary distributed unit.

The coordination configuration information is configured to implement message communication between MAC layers of any two distributed units.

In an optional implementation, the master distributed unit 40 further includes: a first coordination configuration module 44 configured to:
in response to uplink control information of the user equipment (UE), determine, in the case where an information type of the uplink control information is a preset type, a primary or secondary carrier corresponding to the preset type of uplink control information;
determine, based on the primary or secondary carrier corresponding to the preset type of uplink control information and the coordination configuration information in the secondary carrier modification request message, a secondary distributed unit corresponding to the preset type of uplink control information; and
forward the preset type of uplink control information to the secondary distributed unit corresponding to the uplink control information.

In a fifth aspect, FIG. 13 is a block diagram of a secondary distributed unit according to an embodiment of the present disclosure. Referring to FIG. 13, an embodiment of the present disclosure provides a secondary distributed unit 50, including:
a receiving module 51 configured to receive a secondary carrier setup request including a mobility restriction list information element and sent from a master distributed unit; and
a response module 52 configured to generate a secondary carrier setup success response message based on the mobility restriction list information element in the secondary carrier setup request, and return the secondary carrier setup success response message to the master distributed unit, so that the master distributed unit obtains a UE context modification response message based on the secondary carrier setup success response message, and the secondary carrier to be aggregated is configured for the user equipment (UE) based on the UE context modification response message.

In an optional implementation, the secondary distributed unit 50 further includes: a matching module 53 configured to match UE subscription information corresponding to the mobility restriction list information element with network configuration information supported by a secondary carrier corresponding to the secondary distributed unit, and then the response module is specifically configured to generate the secondary carrier setup success response message based on a matching result.

In an optional implementation, the UE context modification request message further includes: a secondary cell to be setup cause value, and the matching module 53 is further configured to:
determine a priority of secondary carrier configuration based on the secondary cell to be setup cause value; and
configure the secondary carrier to be aggregated for the user equipment (UE) based on the priority of the secondary carrier configuration.

In an optional implementation, the secondary cell to be setup cause value includes at least one of:
a first type cause value corresponding to resource congestion on a master base station side;
a second type cause value corresponding to a service volume of the user equipment (UE);
a third type cause value corresponding to a service type of the user equipment (UE);
a fourth type cause value corresponding to estimated maximization of cell spectral efficiency;
a fifth type cause value corresponding to signal measurement; or a sixth type cause value corresponding to other causes.

In an optional implementation, the matching module 53 is specifically configured to:
obtain a user group identifier in the UE subscription information corresponding to the mobility restriction list information element, and a user group identifier in the network configuration information supported by the secondary carrier corresponding to the secondary distributed unit; and
match the user group identifier in the UE subscription information corresponding to the mobility restriction list information element with the user group identifier in the network configuration information; and
then the response module is specifically configured to: in the case where a matching result indicates that the matching is successful, generate the secondary carrier setup success response message according to the matched user group identifier.

In an optional implementation, the matching module 53 is specifically configured to:
judge, based on the UE subscription information, whether the user equipment (UE) supports a non-public network (NPN), and judge, based on the network configuration information, whether the secondary carrier corresponding to the secondary distributed unit is a preset type user group cell, and obtaining judgment results; and
in the case where the judgment results satisfy a preset condition, obtain a user group identifier in the UE subscription information corresponding to the mobility restriction list information element, and a user group identifier in the network configuration information supported by the secondary carrier corresponding to the secondary distributed unit.

The preset condition includes: the user equipment (UE) supports a non-public network (NPN), and the secondary carrier corresponding to the secondary distributed unit belongs to the first preset type user group cell; or, the user equipment (UE) does not support a non-public network (NPN), and the secondary carrier corresponding to the secondary distributed unit is a second preset type user group cell.

In an optional implementation, the response module 52 is specifically configured to:
obtain an initial radio dedicated admission resource of the primary carrier corresponding to the master distributed unit and included in the secondary carrier setup request;
perform time-domain staggering processing on an initial radio dedicated admission resource of a secondary carrier corresponding to the secondary distributed unit based on the initial radio dedicated admission resource of the primary carrier corresponding to the master distributed unit, to obtain a radio dedicated admission resource of the secondary carrier obtained by staggering processing and corresponding to the secondary distributed unit; and
return, to the master distributed unit, the secondary carrier setup success response message including the radio dedicated admission resource of the secondary carrier obtained by staggering processing and corresponding to the secondary distributed unit.

In an optional implementation, the secondary distributed unit includes: a secondary distributed unit corresponding to the secondary carrier to be aggregated; and the response module 52 is further configured to:
obtain coordination configuration information in a secondary carrier modification request message of the master distributed unit; and
implement message communication between MAC layers of any two distributed units based on the coordination configuration information.

In an optional implementation, the secondary distributed unit 50 further includes: a second coordination configuration module 54 configured to:
in response to uplink control information of the user equipment (UE), determine, in the case where an information type of the uplink control information is a preset type, a primary or secondary carrier corresponding to the preset type of uplink control information;
determine, based on the primary or secondary carrier corresponding to the preset type of uplink control information and the coordination configuration information, a master or secondary distributed unit corresponding to the preset type of uplink control information; and
forward the preset type of uplink control information to the master or secondary distributed unit corresponding to the preset type of uplink control information.

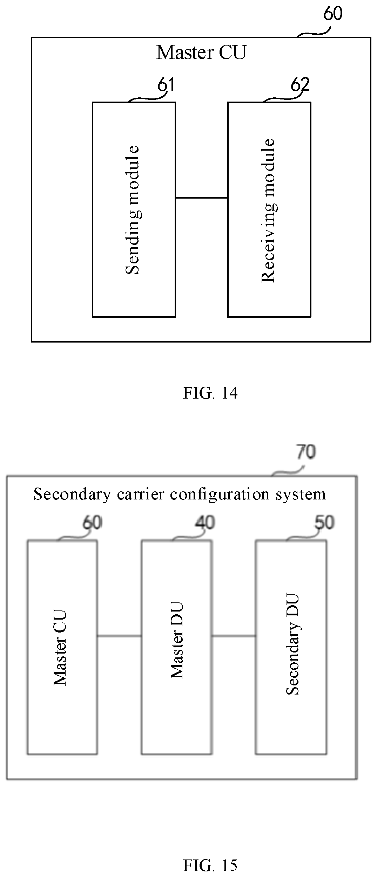

In a sixth aspect, FIG. 14 is a block diagram of a master centralized unit according to an embodiment of the present disclosure. Referring to FIG. 14, an embodiment of the present disclosure provides a master centralized unit 60, which may be included in a master base station corresponding to a user equipment (UE) and include:
a sending module 61 configured to send a UE context modification request message to a master distributed unit in the master base station; where the UE context modification request message includes a secondary cell setup list information element and a mobility restriction list information element; and
a receiving module 62 configured to receive a UE context modification response message returned from the master distributed unit, and configure a secondary carrier to be aggregated for the user equipment (UE) based on the UE context modification response message;
where the UE context modification response message is generated in the method described above.

The sending module 61 is further configured to: obtain and add the mobility restriction list information element to the UE context modification request message, so that the UE context modification request message includes the mobility restriction list information element.

For the specific structure and working principle of each of the above modules, reference may be made to the description of the corresponding part in the method embodiments, which will not be repeated here.

In a seventh aspect, FIG. 15 is a block diagram of a secondary carrier configuration system according to an embodiment of the present disclosure. Referring to FIG. 15, an embodiment of the present disclosure provides a secondary carrier configuration system 70, including: the master distributed unit 40 according to the fourth aspect, the secondary distributed unit 50 according to the fifth aspect, and the master centralized unit 60 according to the sixth aspect.

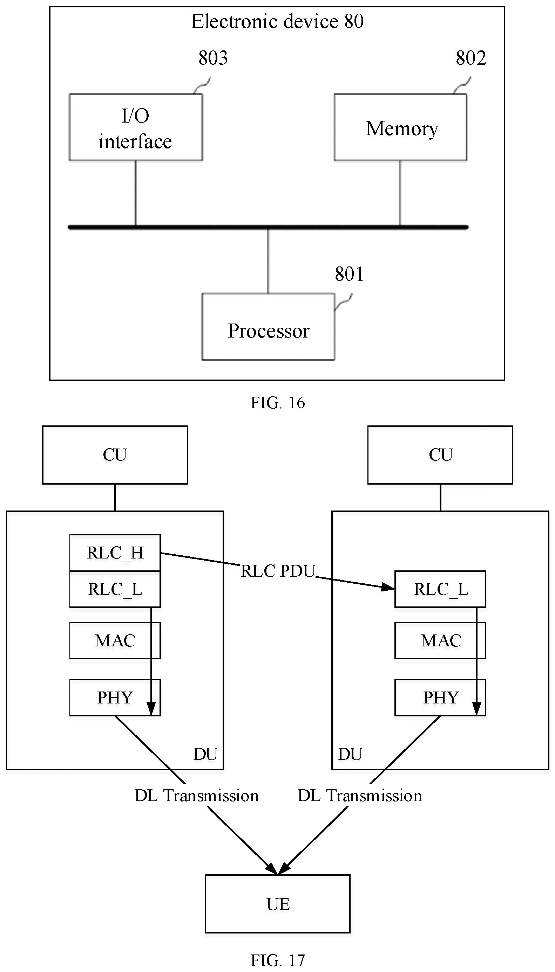

In an eighth aspect, referring to FIG. 16, an embodiment of the present disclosure provides an electronic device, including: at least one processor 801; at least one memory 802; and at least one I/O interface 803 connected between the processor 801 and the memory 802. The memory 802 has at least one computer program stored thereon and executable by the at least one processor 801, which, when executed by the at least one processor 801, causes the at least one processor 801 to execute the secondary carrier configuration method according to any of the above aspects.

In a ninth aspect, an embodiment of the present disclosure provides a computer-readable storage medium having a computer program stored thereon which, when executed by a processor, causes the secondary carrier configuration method according to any of the above aspects to be implemented.

For ease of understanding, a specific example is illustrated below to describe in detail the specific implementation details in the above embodiments.

FIG. 17 is a schematic diagram showing downlink offloading over cross-site secondary carriers according to a specific example of the present disclosure.

According to the 3GPP protocol, carrier aggregation is performed in the data link layer. Based on the optional2 RAN logical architecture provided in Chapter 11 of the 3GPP 38.801 protocol, FIG. 17 illustrates data offloading for carrier aggregation at a RLC_H protocol deployment unit in this specific example.

Referring to FIG. 17, RLC_H, RLC_L, MAC, and PHY respectively represent an RLC layer protocol deployment unit, an MAC layer protocol deployment unit, and a PHY layer protocol deployment unit under the 3GPP standards. Functions of the respective service layers deployed by the base station are listed below:
RLC_H: PDU packaging, ARQ, and other functions;
RLC_L: SDU segmentation, PDU header revision, etc.;
MAC: data frame scheduling and resource allocation, hybrid automatic repeat request (HARQ) processing, and MAC layer control signaling transmission;
PHY: wireless signal modulation and demodulation, scheduling and resource allocation; and
RLC PDU represents a radio link control protocol data unit.

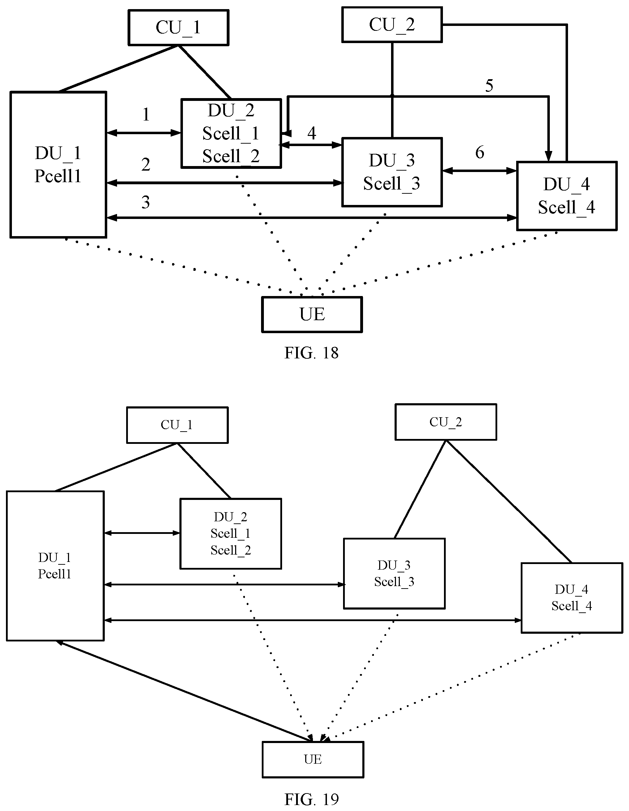

FIG. 18 is a schematic diagram of coordination link setup according to a specific example of the present disclosure.

When all the logical station cells are successfully established, the cell coordination relationship configuration is triggered for a cell that supports CA. A DU control plane coordination link management unit triggers the establishment of the cell coordination relationship used by a UE flow control unit; and the establishment process further triggers the establishment of an MAC layer coordination link management unit.

A control plane coordination link management unit is configured to manage a coordination link of a control plane. After established, the control plane coordination link is mainly configured for message exchange, such as NR secondary carrier setup, modification, release and the like between a source station DU and a target station DU.

A control plane coordination link setup request message includes: a source base station Global gNB ID, and NR CGIs of all cells configured to support CA; and a control plane coordination link setup success response message includes: a target base station Global gNB ID, and NR CGIs of all cells configured to support CA.

The MAC layer coordination link management unit is configured to establish a coordination link for an MAC layer protocol deployment unit. An MAC layer coordination link setup request message includes: IDs of all carriers supporting CA and corresponding physical cell IDs and NR CGIs thereof; and a coordination link setup success response message returned from a peer includes: IDs of all carriers configured to support CA at a peer base station, and corresponding physical cell IDs and NR CGIs thereof.

Referring to FIG. 18, a UE accesses Pcell 1, and adds secondary carriers scell_1, scell_2, scell_3, and scell_4 as cross-site secondary carriers. DU_1 sends UE-level secondary carrier configuration processing messages to DU_2, DU_3, and DU_4, respectively, including a UE secondary carrier setup request and response message, a UE secondary carrier modification request and response message, and a UE secondary carrier reconfiguration complete indication notification message. The signaling message flows are indicated by arrows 1, 2, and 3. Before exchange of the UE-level secondary carrier configuration messages, the DUs exchange non-UE-level configuration messages to obtain information about the corresponding coordinated neighbor cell, including coordination link setup request and response messages between respective service layers of any two of DU_1, DU_2, DU_3 and DU_4. In FIG. 18, signaling 1 represents signaling for transmitting various requests or messages between DU_1 (i.e., master DU) and DU_2 (i.e., secondary DU); signaling 2 represents signaling for transmitting various requests or messages between DU_1 (i.e., master DU) and DU_3 (i.e., secondary DU); and signaling 3 represents signaling for transmitting various requests or messages between DU_1 (i.e., master DU) and DU_4 (i.e., secondary DU). Correspondingly, signaling 4 represents signaling for transmitting various requests or messages between DU_2 and DU_3; signaling 5 represents signaling for transmitting various requests or messages between DU_2 and DU_4; and signaling 6 represents signaling for transmitting various requests or messages between DU_3 and DU_4.

When the configuration of the cross-site secondary carriers is completed, the DU where each cross-site secondary carrier is located sends a secondary carrier activation or deactivation message to DU_1, where the primary carrier is located. MAC layer service coordination scheduling messages are transmitted between the master DU and a secondary DU, and between secondary DUs.

FIG. 19 is a schematic diagram of a MAC layer downlink data AN feedback message flow for a base station deployment according to a specific example of the present disclosure.

Referring to FIG. 19, DU_2, DU_3, and DU_4 send downlink data transmissions to the UE. After receiving a UL ACK/NACK feedback message for the downlink data of the terminal UE, DU_1 distributes downlink feedback acknowledgement messages corresponding to the respective secondary carriers to DU_2, DU_3 and DU_4.

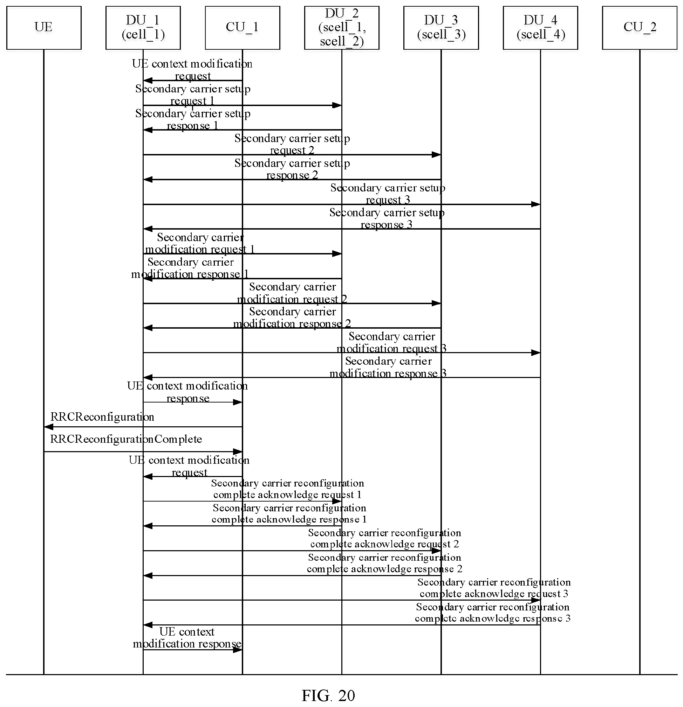

FIG. 20 is a flowchart of a cross-site secondary carrier setup and configuration process according to a specific example of the present disclosure. Referring to FIG. 20, the process includes an operation in which:
after the UE accesses gNodeB_1 composed of CU_1 and DU_1, CU_1 sends an F1 interface UE context modification request message to DU_1, where the message carries a secondary cell setup list information element and a mobility restriction list information element.

A UE flow control unit at the DU_1 side determines that a scell (secondary carrier) in the secondary cell setup list information element is not within a cell range configured by gNodeB_1, but a gNodeB to which the scell belongs has a CA coordination relationship with the current gNodeB_1. DU_1 sends a secondary carrier setup request 1 message to DU_2, where scell_1 and scell_2 are located, and carries message information elements including: a Global gNB ID of a master base station where a primary cell the UE accesses is located, a Global gNB ID of a secondary base station where a secondary cell is located, an NR CGI of the primary cell, UE secondary carrier related information, including: an identifier of a secondary carrier in the UE (sCellIndex), an NR CGI, a CA type (whether uplink CA is supported), and the like of the secondary cell (scell) requested to be added, PhysicalCellGroupConfig information and MAC-CellGroupConfig information for the UE secondary carrier at the cross-site gNB DU_2 side, cell radio network temporary identifier (C-RNTI), UE capability information and mobility restriction list information, and admission reference resources for scell_1 and scell_2 in DU_2, including: a UE primary cell radio dedicated admission resource (spCellConfigDedicated information, corresponding to an information element in the 3GPP 38.331 protocol, which is UE primary carrier dedicated cell configuration), RLC-BearerConfig information for signaling radio bearer (SRB) and data radio bearer (DRB) of the UE in the secondary carrier, and a primary carrier RLC_H offloading IP address of a source DU, and the like. After processing, DU_2 returns a secondary carrier setup response 1 message to the UE flow control unit of the master DU_1. The secondary carrier setup response 1 message carries secondary cell radio dedicated admission resources (sCellConfigDedicated information, corresponding to an information element in the 3GPP 38.331 protocol, which is UE secondary carrier dedicated cell configuration) for scell_1 and scell_2 allocated by a target station, and RLC_L layer offloading IP addresses for scell_1 and scell_2 allocated by the target station.

The master DU_1 receives the secondary carrier setup response 1 message (also referred to as a secondary carrier setup success response message) returned from DU_2.

DU_1 sends a secondary carrier setup request 2 message to DU_3, where scell_3 is located, and carries information elements including: a Global gNB ID of a master base station where a primary cell the UE accesses is located, a Global gNB ID of a secondary base station where a secondary cell is located, an NR CGI of the primary cell, UE secondary carrier related information, including: an identifier of a secondary carrier in the UE, an NR CGI, a CA type (whether uplink CA is supported), and the like of the secondary cell (scell) requested to be added, PhysicalCellGroupConfig information and MAC-CellGroupConfig information for the UE secondary carrier at the cross-site gNB DU_3 side, C-RNTI, UE capability information and mobility restriction list information, and admission reference resources for scell_3 in DU_3, including: a UE primary cell radio dedicated admission resource and radio dedicated admission resources for admission responses of secondary cells scell_1 and scell_2, RLC-BearerConfig information for SRB and DRB of the UE in the secondary cell, and a primary cell RLC_H offloading IP address of a source DU, and the like. After processing, DU_3 returns a secondary carrier setup response 2 message to the UE flow control unit of the master DU_1. The response message 2 carries a UE radio dedicated admission resource for the secondary cell scell_3 allocated by a target station, and an RLC_L layer offloading IP address for scell_3 allocated by the target station.

DU_3 returns a secondary carrier setup response 2 message (also referred to as a secondary carrier setup success response message) carrying UE radio dedicated admission resource configuration for scell_3.

After receiving the secondary carrier setup response 2 message returned from DU_3, the master DU_1 sends a secondary carrier setup request 3 message to DU_4, where scell_4 is located, and carries information elements including: a Global gNB ID of a master base station where a primary cell the UE accesses is located, a Global gNB ID of a secondary base station where a secondary cell is located, an NR CGI of the primary cell, UE secondary carrier related information, including: an identifier of a secondary carrier in the UE, an NR CGI, a CA type (whether uplink CA is supported), and the like of the secondary cell (scell) requested to be added, PhysicalCellGroupConfig information and MAC-CellGroupConfig information for the UE secondary carrier at the cross-site gNB DU_4 side, C-RNTI, UE capability information and mobility restriction list information, and admission reference resources for scell_4 in DU_4, including: a UE primary cell radio dedicated admission resource and radio dedicated admission resources for admission responses of secondary cells scell_1, scell_2 and scell_3, RLC-BearerConfig information for SRB and DRB of the UE in the secondary cell, and a primary carrier RLC_H offloading IP address of a source DU, and the like. After processing, DU_4 returns a secondary carrier setup response 3 message to the UE flow control unit of the master DU_1. The secondary carrier setup response 3 message carries a UE radio dedicated admission resource for the secondary cell scell_4 allocated by a target station, and an RLC_L layer offloading IP address for scell_4 allocated by the target station.

DU_4 returns a secondary carrier setup response 3 message for scell_4, carrying UE radio dedicated admission resource configuration for scell_4.

After receiving the UE radio dedicated admission resource configuration for all the scell_1, scell_2, scell_3 and scell_4, the master DU_1 performs staggering and configuration processing with the resource for the primary cell cell_1. Meanwhile, the RLC layer deployment module of the master DU_1 where the primary carrier is located is notified of all the received RLC offloading target IP addresses of DUs where other scells are located.

The master DU_1 sends secondary carrier modification request messages to DU_2, DU_3, and DU_4 to notify their respective coordination information. Specifically, the master DU_1 sends a secondary carrier modification request 1 to DU_2, a secondary carrier modification request 2 to DU_3, and a secondary carrier modification request 3 to DU_4. Correspondingly, DU_2 returns a secondary carrier modification response 1 to the master DU_1, DU_3 returns a secondary carrier modification response 2 to the master DU_1, and DU_4 returns a secondary carrier modification response 3 to the master DU_1. The coordination request message for each scell includes: a radio dedicated admission resource spCellConfigDedicated for a primary carrier of a current UE, radio dedicated admission resources sCellConfigDedicated for other secondary carriers of the current UE, a physical cell identifier and carrier identifier of each carrier to be aggregated, an NR cell global identifier of the primary carrier, an NR cell global identifier of the secondary carrier corresponding to each secondary distributed unit, a serving cell index (ServCellIndex in the 3GPP 38.473 protocol) of the primary carrier corresponding to the master distributed unit, and a secondary cell to be setup list corresponding to each secondary distributed unit.

The master DU_1 returns an F1 interface UE context modification response message carrying a cell group configuration information element (cellGroupConfig information element in the 3GPP 38.331 protocol) containing scell configuration to the CU. The CU delivers an RRC reconfiguration message (RRCReconfiguration in the 3GPP 38.331 protocol) to the terminal UE, and subsequently receives an RRCReconfigurationComplete message from the terminal UE to complete the configuration and addition of the cross-site scell.

The secondary carrier setup request message sent from the master DU_1 to the DU where each scell is located carries the mobility restriction list information transferred from CU_1 to the DU. After receiving the message, each DU performs admission judgment for each scell using the subscription information of the user equipment (UE) in the mobility restriction list in combination with the network configuration information supported by the secondary cell of each DU, returns a secondary carrier setup success response message if the matching is successful, and returns a secondary carrier setup failure response message carrying an NPN network failure cause value if the matching fails. As shown in the figure, the master DU_1 sends a secondary carrier reconfiguration complete acknowledge request 1 to DU_2, a secondary carrier reconfiguration complete acknowledge request 2 to DU_3, and a secondary carrier reconfiguration complete acknowledge request 3 to DU_4. Correspondingly, DU_2 returns a secondary carrier reconfiguration complete acknowledge response 1 to the master DU_1, DU_3 returns a secondary carrier reconfiguration complete acknowledge response 2 to the master DU_1, and DU_4 returns a secondary carrier reconfiguration complete acknowledge response 3 to the master DU_1.

In summary, the secondary carrier configuration method and system provided in the specific examples of embodiments of the present disclosure have the following beneficial effects:
(1) By adding a mobility restriction list information element to the F1 interface UE context modification request message, direct communication between DUs is allowed to facilitate cross-site secondary carrier configuration, so that the addition and configuration of a cross-site secondary carrier may be adapted to scenarios where a public network and an NPN private network coexist, thereby further expanding the usage scenarios of the method.
(2) By adding a cross-site secondary carrier quickly through a direct communication technology between DUs, including direct communication between a master DU and a secondary DU and between secondary DUs, the present disclosure is applicable to the addition of multiple cross-site secondary carriers in various CRAN and DRAN networking scenarios, thereby improving the service traffic and significantly enhancing the user experience.
(3) By deploying a UE flow control unit on the DU, direct communication between UE service flow control units of DUs is achieved, making the addition of cross-site secondary carriers faster and more efficient. Likewise, the establishment of the MAC layer coordination link between DUs facilitates faster transmission of subsequent internal UE scheduling information at the MAC layers, improves the user traffic, and further expands the method to the addition of cross-site secondary carriers in various CRAN and DRAN networking modes.

The processor is a device with a data processing capability, including but not limited to a central processing unit (CPU), or the like. The memory is a device with a data storage capability, including but not limited to, a random access memory (RAM, more specifically SDRAM, DDR, etc.), a read-only memory (ROM), an electrically erasable programmable read-only memory (EEPROM) or a flash memory (FLASH). The I/O interface (read/write interface) is connected between the processor and the memory to enable information interaction between the memory and the processor, and includes, but are is limited to, a data bus or the like.

Those of ordinary skill in the art will appreciate that all or some operations, function modules/units in the system and apparatus disclosed above may be implemented as software, firmware, hardware, and suitable combinations thereof.

In a hardware implementation, the division between the function modules/units mentioned in the above description does not necessarily correspond to the division of physical components; for example, one physical component may have multiple functions, or one function or operation may be performed cooperatively by several physical components.

Some or all physical components may be implemented as software executed by a processor, such as a central processing unit (CPU), a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium). As is well known to those of ordinary skill in the art, the term computer storage medium includes volatile and nonvolatile, removable and non-removable media implemented in any method or technology for storing information, such as computer-readable instructions, data structures, program modules or other data. The computer storage medium includes, but is not limited to, a random access memory (RAM, more specifically SDRAM, DDR, etc.), a read only memory (ROM), an electrically erasable programmable read-only memory (EEPROM), a flash memory (FLASH), or other disk storage; a compact disk read-only memory (CD-ROM), a digital versatile disk (DVD), or other optical disk storage; a magnetic cassette, a magnetic tape, a magnetic disk memory or any other magnetic storage; or any other medium which can be used to store the desired information and accessed by a computer. Moreover, it is well known to those of ordinary skill in the art that a communication medium typically includes a computer-readable instruction, a data structure, a program module, or other data in a modulated data signal, such as a carrier wave or other transport mechanism, and may include any information delivery medium.

The present disclosure has disclosed exemplary embodiments, and although specific terms are employed, they are used and should be interpreted merely in a generic and descriptive sense, not for purposes of limitation. In some instances, as would be apparent to one skilled in the art, features, characteristics and/or elements described in connection with a particular embodiment may be used alone or in combination with features, characteristics and/or elements described in connection with another embodiment, unless expressly stated otherwise. It will, therefore, be understood by those skilled in the art that various changes in form and details may be made therein without departing from the scope of the present disclosure as set forth in the appended claims.

## Claims

1. A secondary carrier configuration method applicable to a master distributed unit (DU) in a master base station corresponding to a user equipment (UE), wherein the method comprises:
determining a secondary carrier to be aggregated based on a secondary cell setup list information element in a UE context modification request;
sending a secondary carrier setup request to the secondary distributed unit based on a carrier aggregation coordination relationship of a secondary distributed unit corresponding to the secondary carrier to be aggregated, wherein the secondary carrier setup request comprises a mobility restriction list information element in the UE context modification request; and
determining a UE context modification response message based on a secondary carrier setup success response message corresponding to the secondary carrier setup request, so that the secondary carrier to be aggregated is configured for the user equipment (UE) based on the UE context modification response message.

2. The method according to claim 1, wherein the secondary carrier setup request further comprises: an initial radio dedicated admission resource of a primary carrier corresponding to the master distributed unit; and the secondary carrier setup success response message comprises: a radio dedicated admission resource of the secondary carrier obtained by staggering processing and corresponding to the secondary distributed unit.

3. The method according to claim 2, wherein in the case of a plurality of secondary carriers to be aggregated and a plurality of secondary distributed units corresponding to the secondary carriers to be aggregated, before determining the UE context modification response message based on the secondary carrier setup success response message corresponding to the secondary carrier setup request, the method further comprises:
based on a radio dedicated admission resource of the secondary carrier obtained by staggering processing and corresponding to each secondary distributed unit, performing time-domain staggering processing on the initial radio dedicated admission resource of the primary carrier corresponding to the master distributed unit, to obtain a radio dedicated admission resource of the primary carrier obtained by staggering processing and corresponding to the master distributed unit;
generating coordination configuration information based on the radio dedicated admission resource of the primary carrier obtained by staggering processing and corresponding to the master distributed unit, and the radio dedicated admission resource of the secondary carrier obtained by staggering processing and corresponding to each secondary distributed unit, and generating a secondary carrier modification request message from the coordination configuration information; and
sending the secondary carrier modification request message to each secondary distributed unit, and receiving a secondary carrier modification response message returned from the secondary distributed unit.

4. The method according to claim 3, wherein generating coordination configuration information based on the radio dedicated admission resource of the primary carrier obtained by staggering processing and corresponding to the master distributed unit, and the radio dedicated admission resource of the secondary carrier obtained by staggering processing and corresponding to each secondary distributed unit comprises:
obtaining an NR cell global identifier of the primary carrier corresponding to the master distributed unit, an NR cell global identifier of the secondary carrier corresponding to each secondary distributed unit, a serving cell index of the primary carrier corresponding to the master distributed unit, and a secondary cell setup list information element corresponding to each secondary distributed unit; and
generating the coordination configuration information based on the radio dedicated admission resource of the primary carrier obtained by staggering processing and corresponding to the master distributed unit, the radio dedicated admission resource of the secondary carrier obtained by staggering processing and corresponding to each secondary distributed unit, the NR cell global identifier of the primary carrier corresponding to the master distributed unit, the NR cell global identifier of the secondary carrier corresponding to each secondary distributed unit, the serving cell index of the primary carrier corresponding to the master distributed unit, and the secondary cell setup list information element corresponding to each secondary distributed unit,
wherein the coordination configuration information is configured to implement message communication between MAC layers of any two distributed units.

5. The method according to claim 3, wherein after receiving the secondary carrier modification response message returned from the secondary distributed unit, the method further comprises:
in response to uplink control information of the user equipment (UE), determining, in the case where an information type of the uplink control information is a preset type, a primary or secondary carrier corresponding to the preset type of uplink control information;
determining, based on the primary or secondary carrier corresponding to the preset type of uplink control information and the coordination configuration information in the secondary carrier modification request message, a secondary distributed unit corresponding to the preset type of uplink control information; and
forwarding the preset type of uplink control information to the secondary distributed unit corresponding to the uplink control information.

6. The method according to any one of claims 1 to 5, further comprising:
in the case where the master distributed unit receives a data transmission instruction, performing data transmission with an RLC layer deployment module in the secondary distributed unit based on a communication address of the RLC layer deployment module of the secondary carrier.

7. A secondary carrier configuration method applicable to a secondary distributed unit, wherein the method comprises:
receiving a secondary carrier setup request comprising a mobility restriction list information element and sent from a master distributed unit; and
generating a secondary carrier setup success response message based on the mobility restriction list information element in the secondary carrier setup request, and returning the secondary carrier setup success response message to the master distributed unit, so that the master distributed unit obtains a UE context modification response message based on the secondary carrier setup success response message, and configures a secondary carrier to be aggregated for a user equipment (UE) based on the UE context modification response message.

8. The method according to claim 7, wherein generating the secondary carrier setup success response message based on the mobility restriction list information element comprises:
matching UE subscription information corresponding to the mobility restriction list information element with network configuration information supported by a secondary carrier corresponding to the secondary distributed unit, and generating the secondary carrier setup success response message based on a matching result.

9. The method according to claim 8, wherein matching UE subscription information corresponding to the mobility restriction list information element with network configuration information supported by the secondary carrier corresponding to the secondary distributed unit, and generating the secondary carrier setup success response message based on the matching result comprises:
obtaining a user group identifier in the UE subscription information corresponding to the mobility restriction list information element, and a user group identifier in the network configuration information supported by the secondary carrier corresponding to the secondary distributed unit;
matching the user group identifier in the UE subscription information corresponding to the mobility restriction list information element with the user group identifier in the network configuration information; and
if a matching result indicates that the matching is successful, generating the secondary carrier setup success response message according to the matched user group identifier.

10. The method according to claim 9, wherein obtaining the user group identifier in the UE subscription information corresponding to the mobility restriction list information element, and the user group identifier in the network configuration information supported by the secondary carrier corresponding to the secondary distributed unit comprises:
judging, based on the UE subscription information, whether the user equipment (UE) supports a non-public network (NPN), and judging, based on the network configuration information, whether the secondary carrier corresponding to the secondary distributed unit is a preset type user group cell, and obtaining judgment results;
in the case where the judgment results satisfy a preset condition, obtaining a user group identifier in the UE subscription information corresponding to the mobility restriction list information element, and a user group identifier in the network configuration information supported by the secondary carrier corresponding to the secondary distributed unit;
wherein the preset condition comprises: the user equipment (UE) supports a non-public network (NPN), and the secondary carrier corresponding to the secondary distributed unit belongs to the first preset type user group cell; or, the user equipment (UE) does not support a non-public network (NPN), and the secondary carrier corresponding to the secondary distributed unit is a second preset type user group cell.

11. The method according to claim 7, wherein returning the secondary carrier setup success response message to the master distributed unit comprises:
obtaining an initial radio dedicated admission resource of the primary carrier corresponding to the master distributed unit and comprised in the secondary carrier setup request;
performing time-domain staggering processing on an initial radio dedicated admission resource of a secondary carrier corresponding to the secondary distributed unit based on the initial radio dedicated admission resource of the primary carrier corresponding to the master distributed unit, to obtain a radio dedicated admission resource of the secondary carrier obtained by staggering processing and corresponding to the secondary distributed unit;
returning, to the master distributed unit, the secondary carrier setup success response message comprising the radio dedicated admission resource of the secondary carrier obtained by staggering processing and corresponding to the secondary distributed unit.

12. The method according to claim 11, wherein the secondary distributed unit comprises: a secondary distributed unit corresponding to the secondary carrier to be aggregated; and after returning, to the master distributed unit, the secondary carrier setup success response message comprising the radio dedicated admission resource of the secondary carrier obtained by staggering processing and corresponding to the secondary distributed unit, the method further comprises:
obtaining coordination configuration information in a secondary carrier modification request message of the master distributed unit; and
implementing message communication between MAC layers of any two distributed units based on the coordination configuration information.

13. The method according to claim 12, wherein after returning the secondary carrier modification response message to the master distributed unit, the method further comprises:
in response to uplink control information of the user equipment (UE), determining, in the case where an information type of the uplink control information is a preset type, a primary or secondary carrier corresponding to the preset type of uplink control information;
determining, based on the primary or secondary carrier corresponding to the preset type of uplink control information and the coordination configuration information, a master or secondary distributed unit corresponding to the preset type of uplink control information; and
forwarding the preset type of uplink control information to the master or secondary distributed unit corresponding to the preset type of uplink control information.

14. The method according to any one of claims 7 to 13, further comprising:
in the case where the secondary distributed unit receives a data transmission instruction, performing data transmission with an RLC layer deployment module in the master distributed unit based on a communication address of the RLC layer deployment module of the primary carrier.

15. The method according to any one of claims 7 to 13, wherein the UE context modification request message further comprises: a secondary cell to be setup cause value, and configuring the secondary carrier to be aggregated for the user equipment (UE) based on the UE context modification response message comprises:
determining a priority of secondary carrier configuration based on the secondary cell to be setup cause value; and
configuring the secondary carrier to be aggregated for the user equipment (UE) based on the priority of the secondary carrier configuration.

16. The method according to claim 15, wherein the secondary cell to be setup cause value comprises at least one of:
a first type cause value corresponding to resource congestion on a master base station side;
a second type cause value corresponding to a service volume of the user equipment (UE);
a third type cause value corresponding to a service type of the user equipment (UE);
a fourth type cause value corresponding to estimated maximization of cell spectral efficiency;
a fifth type cause value corresponding to signal measurement; or a sixth type cause value corresponding to other causes.

17. A secondary carrier configuration method applicable to a master centralized unit in a master base station corresponding to a user equipment (UE), wherein the method comprises:
sending a UE context modification request message to a master distributed unit in the master base station; wherein the UE context modification request message comprises a secondary cell setup list information element and a mobility restriction list information element; and
receiving a UE context modification response message returned from the master distributed unit, and configuring a secondary carrier to be aggregated for the user equipment (UE) based on the UE context modification response message;
wherein the UE context modification response message is generated in the method according to any one of claims 1 to 6.

18. The method according to claim 16, wherein before sending the UE context modification request message to the master distributed unit in the master base station; the method further comprises:
obtaining and adding the mobility restriction list information element to the UE context modification request message, so that the UE context modification request message comprises the mobility restriction list information element.

19. A master distributed unit, comprising:
a determination module configured to determine a secondary carrier to be aggregated based on a secondary cell setup list information element in a UE context modification request;
a sending module configured to send a secondary carrier setup request to the secondary distributed unit based on a carrier aggregation coordination relationship of a secondary distributed unit corresponding to the secondary carrier to be aggregated, wherein the secondary carrier setup request comprises a mobility restriction list information element in the UE context modification request; and
a configuration module configured to determine a UE context modification response message based on a secondary carrier setup success response message corresponding to the secondary carrier setup request, so that the secondary carrier to be aggregated is configured for the user equipment (UE) based on the UE context modification response message.

20. A secondary distributed unit, comprising:
a receiving module configured to receive a secondary carrier setup request comprising a mobility restriction list information element and sent from a master distributed unit; and
a response module configured to generate a secondary carrier setup success response message based on the mobility restriction list information element in the secondary carrier setup request, and return the secondary carrier setup success response message to the master distributed unit, so that the master distributed unit obtains a UE context modification response message based on the secondary carrier setup success response message, and the secondary carrier to be aggregated is configured for the user equipment (UE) based on the UE context modification response message.

21. A master centralized unit, comprising:
a sending module configured to send a UE context modification request message to a master distributed unit in the master base station; wherein the UE context modification request message comprises a secondary cell setup list information element and a mobility restriction list information element; and
a receiving module configured to receive a UE context modification response message returned from the master distributed unit, and configure a secondary carrier to be aggregated for the user equipment (UE) based on the UE context modification response message;
wherein the UE context modification response message is generated in the method according to any one of claims 1 to 6.

22. A secondary carrier configuration system, comprising: the master distributed unit according to claim 19, the secondary distributed unit according to claim 20, and the master centralized unit according to claim 21.

23. An electronic device, comprising a memory and a processor; wherein the memory stores a computer program executable by the processor which, when executed by the processor, causes the secondary carrier configuration method according to any one of claims 1 to 18 to be implemented.

24. A computer-readable storage medium having a computer program stored thereon which, when executed by a processor, causes the secondary carrier configuration method according to any one of claims 1 to 18 to be implemented.
